# EUROPEAN PATENT APPLICATION

(11) **EP 4 478 785 A1**
(43) Date of publication of application: **18.12.2024**
(21) Application number: 23769647.1
(22) Date of filing: 09.03.2023
(51) Int. Cl.: H04W 36/34

(54) **COMMUNICATION METHOD AND APPARATUS**

(30) Priority: 16.03.2022 CN 202210260407
(71) Applicant: Huawei Technologies Co., Ltd., Shenzhen, Guangdong 518129 (CN)
(72) Inventor: ZHANG, Lili, Shenzhen, Guangdong 518129 (CN); DAI, Xizeng, Shenzhen, Guangdong 518129 (CN); LUO, Qingquan, Shenzhen, Guangdong 518129 (CN)
(74) Representative: Pfenning, Meinig & Partner mbB
(86) International application number: PCT/CN2023/080399
(87) International publication number: WO 2023/174141

(57) **Abstract**

Embodiments of this application provide a communication method and apparatus. The method includes: A terminal device may report a first switching delay for switching in a frequency band group, or the terminal device may report a second switching delay for switching between frequency band groups, so that a network device can schedule uplink data for the terminal device based on the switching delay, and the terminal device can effectively perform frequency band switching in the frequency band group or between the frequency band groups, that is, the terminal device can flexibly and effectively switch between a plurality of frequency bands, thereby ensuring data transmission performance.

## Description

This application claims priority to Chinese Patent Application No. 202210260407.2, filed with the China National Intellectual Property Administration on March 16, 2022 and entitled "COMMUNICATION METHOD AND APPARATUS", which is incorporated herein by reference in its entirety.

### TECHNICAL FIELD

Embodiments of this application relate to the field of wireless communication, and more specifically, to a communication method and apparatus.

### BACKGROUND

In scenarios such as a supplementary uplink (supplementary UL, SUL) scenario, a terminal device needs to switch between a plurality of frequency bands (for example, 700 MHz to 800 MHz, 700 MHz to 900 MHz, 1.8 GHz to 2.1 GHz, and 3.5 GHz to 4.9 GHz), to ensure data transmission performance.

Generally, in consideration of costs, hardware complexity, and the like of the terminal device, a quantity of phase-locked loops of the terminal device does not completely match a quantity of frequency bands. Therefore, when the terminal device needs to switch between a plurality of frequency bands, and a quantity of phase-locked loops of the terminal device does not match a quantity of frequency bands, how the terminal device effectively switches between the plurality of frequency bands to ensure data transmission performance becomes a problem to be urgently resolved.

### SUMMARY

Embodiments of this application provide a communication method and apparatus, so that a terminal device can effectively perform frequency band switching in a frequency band group, that is, the terminal device can flexibly and effectively switch between a plurality of frequency bands, thereby ensuring data transmission performance.

According to a first aspect, a communication method is provided. The method may be performed by a terminal device (for example, user equipment), or may be performed by a component (for example, a chip or a circuit) of a terminal device. This is not limited.

The method includes: The terminal device determines first switching delays of N frequency band groups, where the N frequency band groups include an i^{th} frequency band group, the first switching delays of the N frequency band groups include an i^{th} first switching delay, the i^{th} first switching delay is a delay for switching by the terminal device between at least two different frequency bands included in the i^{th} frequency band group, and N is a positive integer; and the terminal device sends first information to a network device, where the first information includes the first switching delays of the N frequency band groups.

A "frequency band group" mentioned in this application can be understood as a "frequency band set". A "frequency band" may be replaced with a "carrier", a "band", or "a carrier in a frequency band". The "frequency band group" may be replaced with a "carrier group" or a "carrier set". "In a frequency band" can be understood as "on a carrier in a frequency band".

In this application, a frequency band group #1 (for example, a first frequency band group) and a frequency band group #2 (for example, a second frequency band group) may be completely different. In other words, a frequency band included in the frequency band group #1 and a frequency band included in the frequency band group #2 may be completely different frequency bands. Alternatively, the frequency band group #1 and the frequency band group #2 may have an intersection set. In other words, in this application, a frequency band in the frequency band group #1 and a frequency band in the frequency band group #2 are incompletely the same, that is, the two groups may have a same frequency band, or may have different frequency bands.

In this application, a frequency band group may include "at least one frequency band".

In this application, all of the N frequency band groups may be preconfigured by the network device. For example, the network device may perform preconfiguration as follows: The frequency band group #1 includes {frequency band #A and frequency band #B}, the frequency band group #2 may include {frequency band #A and frequency band #C}, a frequency band group #3 may include {frequency band #A, frequency band #B, and frequency band #C}, and so on.

When a "frequency band" in this application is understood as a "carrier", for example, the frequency band #A supports three carriers: a carrier #1, a carrier #2, and a carrier #3; the frequency band #B supports four carriers: a carrier #4, a carrier #5, a carrier #6, and a carrier #7; the frequency band #C supports two carriers: a carrier #8 and a carrier #9; and a frequency band #D supports two carriers: a carrier #10 and a carrier #11. That "the frequency band group #1 includes {frequency band #A and frequency band #B}" may mean that a carrier group #1 includes the carrier #1 and the carrier #6. That "the frequency band group #2 may include {frequency band #A and frequency band #C}" may mean that a carrier group #2 includes the carrier #8 and the carrier #3.

In this application, the following switching in a frequency band group can also be understood as, for example, switching between the carrier #1 and the carrier #6 in the carrier group #1, or for another example, switching between the carrier #3 and the carrier #8 in the carrier group #2. The following switching between frequency band groups (for example, switching between the frequency band group #1 and the frequency band group #2) can also be understood as switching between carrier groups (for example, switching between the carrier group #1 and the carrier group #2).

For example, the frequency band #A may be 3.5 GHz, the frequency band #B may be 2.1 GHz, the frequency band #C may be 1.8 GHz, the frequency band #D may be 700 MHz/800 MHz/900 MHz, and so on.

In this application, the network device may semi-statically configure frequency band groups. For example, the network device may configure a frequency band group for the terminal device once every five slots. For example, the terminal device may pre-lock a phase-locked loop to a corresponding frequency band in the five slots.

Based on the foregoing technical solution, in this application, the terminal device may report the first switching delays of the N frequency band groups, where a first switching delay is a delay for switching by the terminal device between at least two different frequency bands included in a frequency band group. In other words, the terminal device reports the delays for switching in the frequency band groups, and the network device may schedule uplink data to the terminal device, so that the terminal device can effectively perform frequency band switching in the frequency band groups, that is, the terminal device can flexibly and effectively switch between a plurality of frequency bands, thereby ensuring data transmission performance.

In a possible implementation, the first information further includes an i^{th} frequency band group identifier, the i^{th} frequency band group identifier is any one of N frequency band group identifiers, and the N frequency band group identifiers are in one-to-one correspondence with the switching delays of the N frequency band groups.

In a possible implementation, the method further includes: The terminal device receives frequency band group identification information from the network device, where the frequency band group identification information includes the N frequency band group identifiers.

In a possible implementation, the method further includes: The N frequency band group identifiers may be preconfigured.

Based on the foregoing technical solution, in this application, a correspondence between a frequency band group identifier and a frequency band group is used, so that the frequency band groups can be distinguished from each other. In this way, the terminal device can report the first switching delays corresponding to the frequency band group identifiers (which can also be understood as reporting the first switching delays by using a frequency band group as a granularity). In comparison with an existing manner in which the terminal device reports switching delays by using each frequency band as a granularity, signaling overheads can be greatly reduced in this embodiment.

In a possible implementation, the first information further includes quantities of transmit radio frequency chains supported by the terminal device in the at least two different frequency bands, and the first information is used by the network device to determine scheduling of uplink data.

Based on the foregoing technical solution, in this application, the terminal device may further report quantities of transmit radio frequency chains supported in different frequency bands, so that when scheduling uplink data, the network device may further determine, based on a capability of supporting radio frequency chains by the terminal device, a switching delay needed for switching between frequency bands, to schedule an appropriate resource for the uplink data to the terminal device. This improves data transmission performance.

In a possible implementation, the first switching delay is an item in a first switching set, and the first switching set includes 0 microseconds and 35 microseconds.

In this application, values in the first switching set may be less than or equal to 35 microseconds. For example, the first switching set may include {0 microseconds, 30 microseconds, and 35 microseconds}, the first switching set may include {0 microseconds and 35 microseconds}, or the first switching set may include {0 microseconds, 15 microseconds, 20 microseconds, and 35 microseconds}.

Based on the foregoing technical solution, in this application, the phase-locked loop may be pre-locked to a switched frequency band. When a frequency band before switching and the switched frequency band are on different channels, switching between two different frequency bands can be implemented in 0 microseconds. In this way, a delay for switching by the terminal device between the two frequency bands can be greatly reduced, and switching can be completed more effectively. This ensures data transmission performance.

In a possible implementation, the method further includes: The terminal device receives second information from the network device, where the second information indicates a target frequency band group identifier; and the terminal device performs, based on the second information, frequency band switching in a target frequency band group corresponding to the target frequency band group identifier, where the target frequency band group identifier is one or more of the N frequency band group identifiers.

Based on the foregoing technical solution, in this application, the network device may further dynamically indicate the frequency band group in which the terminal device is to perform switching, thereby improving flexibility and real-time quality of performing switching by the terminal device in the frequency band group.

According to a second aspect, a communication method is provided. The method may be performed by a terminal device (for example, user equipment), or may be performed by a component (for example, a chip or a circuit) of a terminal device. This is not limited.

The method includes: The terminal device determines M second switching delays, where a j^{th} second switching delay is a delay for switching by the terminal device between a first frequency band group and a second frequency band group, the j^{th} second switching delay is one of the M second switching delays, the first frequency band group and the second frequency band group each include at least one frequency band, and M is a positive integer; and the terminal device sends third information to a network device, where the third information includes at least the j^{th} second switching delay.

In this application, the terminal device may determine a plurality of second switching delays, where each second switching delay is corresponding to two different frequency band groups. For example, the terminal device may determine a k^{th} second switching delay, and the k^{th} second switching delay may be a delay for switching between a third frequency band group and a fourth frequency band. For another example, the terminal device may determine a p^{th} second switching delay, and the p^{th} second switching delay is a delay for switching between a fifth frequency band group and a sixth frequency band.

Based on the foregoing technical solution, in this application, the terminal device may report the second switching delays for switching between the frequency band groups, where a second switching delay is a delay for switching by the terminal device between the first frequency band group and the second frequency band group. In other words, the terminal device reports the delays for switching between the frequency band groups, and the network device may determine a K2 delay, so that the terminal device can effectively perform frequency band switching between the frequency band groups. In this way, the terminal device flexibly and effectively completes switching between a plurality of frequency bands, thereby ensuring data transmission performance.

In a possible implementation, the third information further includes at least a first frequency band group identifier and a second frequency band group identifier.

In this application, the first frequency band group identifier and the second frequency band group identifier may be preconfigured, or may be sent by the network device to the terminal device.

Based on the foregoing technical solution, in this application, a correspondence between a frequency band group identifier and a frequency band group is used, so that the frequency band groups can be distinguished from each other. In this way, the terminal device can report the second switching delays corresponding to the frequency band group identifiers (which can also be understood as reporting the second switching delays by using a frequency band group as a granularity). In comparison with an existing manner in which the terminal device reports switching delays by using each frequency band as a granularity, signaling overheads can be greatly reduced in this embodiment.

In a possible implementation, the third information further includes quantities of transmit radio frequency chains supported by the terminal device in the frequency bands included in the first frequency band group and the second frequency band group, and the third information is used by the network device to determine scheduling of uplink data.

Based on the foregoing technical solution, in this application, the terminal device may further report quantities of transmit radio frequency chains supported in different frequency bands, so that when scheduling uplink data, the network device may further determine, based on a capability of supporting radio frequency chains by the terminal device, a switching delay needed for switching between frequency bands, to schedule an appropriate resource for the uplink data to the terminal device. This improves data transmission performance.

In a possible implementation, the second switching delay is an item in a second switching set, and the second switching set includes 140 microseconds, 210 microseconds, and 280 microseconds.

In this application, values in the second switching set may be greater than 35 microseconds and less than or equal to 1 millisecond. For example, the second switching set may include {140 microseconds, 210 microseconds, and 280 microseconds}, the second switching set may include {140 microseconds, 210 microseconds, and 500 microseconds}, or the second switching set may include {140 microseconds, 280 microseconds, 400 microseconds, 500 microseconds, and 1 millisecond}.

In this application, when the terminal device performs switching between two frequency band groups, if phase-locked loops use a serial switching manner, for example, if the serial switching of the phase-locked loops is performed in 280 microseconds, in this case, a delay for switching by the terminal device between the two frequency band groups can be fully taken into account, to facilitate resource scheduling by the network device. This enables the terminal device to complete switching more effectively, thereby ensuring data transmission performance.

In a possible implementation, the frequency band group identification information includes X frequency band group identifiers, X is a positive integer, and the method further includes: The terminal device receives fourth information from the network device, where the fourth information indicates target frequency band group identifiers; and the terminal device performs, based on the fourth information, frequency band switching between target frequency band groups corresponding to the target frequency band group identifiers, where the target frequency band group identifiers are at least two of the X frequency band group identifiers.

Based on the foregoing technical solution, in this application, the network device may further dynamically indicate the frequency band groups between which the terminal device is to perform switching, thereby improving flexibility and real-time quality of performing switching by the terminal device between the frequency band groups.

In a possible implementation, the third information further includes at least a j^{th} frequency band group switching identifier, and the j^{th} frequency band group switching identifier is an identifier of switching by the terminal device between the first frequency band group and the second frequency band group.

In this application, the terminal device may determine a plurality of second switching delays, where each second switching delay is corresponding to a different frequency band group switching identifier. For example, the terminal device may determine a k^{th} second switching delay, and the k^{th} second switching delay may be corresponding to a k^{th} frequency band group switching identifier (switching between a third frequency band group and a fourth frequency band). For another example, the terminal device may determine a p^{th} second switching delay, and the p^{th} second switching delay is corresponding to a p^{th} frequency band group switching identifier (switching between a fifth frequency band group and a sixth frequency band).

In this application, the frequency band group switching identifiers may be preconfigured, or may be sent by the network device to the terminal device.

Based on the foregoing technical solution, in this application, the frequency band groups are distinguished from each other and the network device configures the frequency band group switching identifiers, so that the terminal device can report the second switching delays corresponding to the frequency band group switching identifiers (for example, indexes) (which can also be understood as reporting the second switching delays by using frequency band group switching as a granularity). In this way, signaling overheads can be further reduced.

In a possible implementation, the third information further includes quantities of transmit radio frequency chains supported by the terminal device in the frequency bands included in the first frequency band group and the second frequency band group that are identified by the j^{th} frequency band group switching identifier, and the third information is used by the network device to determine scheduling of uplink data for transmission.

Based on the foregoing technical solution, in this application, the terminal device may further report quantities of transmit radio frequency chains supported in different frequency bands, so that when scheduling uplink data, the network device may further determine, based on a capability of supporting radio frequency chains by the terminal device, a switching delay needed for switching between frequency bands, to schedule an appropriate resource for the uplink data to the terminal device. This improves data transmission performance.

In a possible implementation, the second switching delay is an item in a third switching set, and the third switching set includes 0 microseconds, 35 microseconds, 140 microseconds, 210 microseconds, and 280 microseconds.

In this application, the third switching set is designed in consideration of various scenarios in which phase-locked loops may use a serial switching manner, a partial serial switching manner, and a parallel switching manner and the phase-locked loops are pre-locked to a switched frequency band when the terminal device performs switching between two frequency band groups. In this case, a delay for switching by the terminal device between the two frequency band groups can be fully taken into account in this case, to facilitate resource scheduling by the network device. This enables the terminal device to complete switching more effectively, thereby ensuring data transmission performance.

In a possible implementation, the frequency band group switching identifier includes Y frequency band group switching identifiers, Y is a positive integer, and the method further includes: The terminal device receives fifth information from the network device, where the fifth information indicates a target frequency band group switching identifier; and the terminal device performs, based on the fifth information, frequency band switching between target frequency band groups corresponding to the target frequency band group switching identifier, where the target frequency band group switching identifier is one or more of the Y frequency band group switching identifiers.

Based on the foregoing technical solution, in this application, the network device may further dynamically indicate the frequency band groups between which the terminal device is to perform switching, thereby improving flexibility and real-time quality of performing switching by the terminal device between the frequency band groups.

According to a third aspect, a communication method is provided. The method may be performed by a terminal device (for example, user equipment), or may be performed by a component (for example, a chip or a circuit) of a terminal device. This is not limited.

The method includes: The terminal device determines a third switching delay, where the third switching delay is a delay for switching by the terminal device from a first state to a second state, the first state is that the terminal device supports a first quantity of transmit radio frequency chains in a frequency band in a seventh frequency band group, the second state is that the terminal device supports a second quantity of transmit radio frequency chains in a frequency band in an eighth frequency band group, and the seventh frequency band group and the eighth frequency band group each include at least one frequency band; and the terminal device sends sixth information to the network device, where the sixth information includes the third switching delay.

In this application, the seventh frequency band group and the eighth frequency band each may include at least one frequency band. For example, the method can also be understood as follows: The terminal device determines the third switching delay, where the third switching delay is the delay for switching by the terminal device from the first state to the second state, the first state is that the terminal device supports a first quantity of transmit radio frequency chains in at least one a^{th} frequency band, and the second state is that the terminal device supports a second quantity of transmit radio frequency chains in at least one b^{th} frequency band; and the terminal device sends the sixth information to the network device, where the sixth information includes the third switching delay.

In this application, the a^{th} frequency band and the b^{th} frequency band are different, the at least one a^{th} frequency band and the at least one b^{th} frequency band are completely different, or the at least one a^{th} frequency band and the at least one b^{th} frequency band are incompletely the same. In other words, it can also be understood that the at least one a^{th} frequency band and the at least one b^{th} frequency band may have a common frequency band. Details are not described below again.

In a possible implementation, the third switching delay is an item in a fourth switching set, and a value in the fourth switching set is greater than or equal to 0 and less than or equal to 1 millisecond. Alternatively, a value in the fourth switching set may be greater than or equal to duration of three slots or duration of four slots.

In a possible implementation, the third switching delay is 280 microseconds.

In a possible implementation, the third switching delay is an item in a fourth switching set, and the fourth switching set includes at least 0 microseconds, 35 microseconds, 140 microseconds, 210 microseconds, and 280 microseconds.

In a possible implementation, the third switching delay is used by the network device to determine scheduling of uplink data.

In a possible implementation, the sixth information further includes a seventh frequency band group identifier and an eighth frequency band group identifier.

In a possible implementation, the sixth information further includes a quantity of transmit radio frequency chains supported by the terminal device in a frequency band in the seventh frequency band group and a quantity of transmit radio frequency chains supported by the terminal device in a frequency band in the eighth frequency band group.

Based on the foregoing technical solution, in this application, the terminal device may report the third switching delay for switching between the states. The third switching delay may be a typical value. The network device may determine scheduling of the uplink data for the terminal device based on the third switching delay, so that the terminal device can effectively perform frequency band switching between the states, that is, the terminal device can flexibly and effectively switch between a plurality of frequency bands, thereby ensuring data transmission performance.

According to a fourth aspect, a communication method is provided. The method may be performed by a network device (for example, a base station), or may be performed by a component (for example, a chip or a circuit) of a network device. This is not limited.

For beneficial effects corresponding to network-side technical solutions and beneficial effects corresponding to apparatuses, refer to the descriptions of the beneficial effects of the terminal sides. Details are not described herein again.

The method includes: The network device receives first information from a terminal device, where the first information includes first switching delays of N frequency band groups, the N frequency band groups include an i^{th} frequency band group, the first switching delays of the N frequency band groups include an i^{th} first switching delay, the i^{th} first switching delay is a delay for switching by the terminal device between at least two different frequency bands included in the i^{th} frequency band group, and N is a positive integer; and the network device determines scheduling of uplink data based on the first information.

In a possible implementation, the first information further includes an i^{th} frequency band group identifier, the i^{th} frequency band group identifier is any one of N frequency band group identifiers, and the N frequency band group identifiers are in one-to-one correspondence with the switching delays of the N frequency band groups.

In a possible implementation, the network device sends frequency band group identification information to the terminal device, where the frequency band group identification information includes the N frequency band group identifiers.

In a possible implementation, the first information further includes quantities of transmit radio frequency chains supported by the terminal device in the at least two different frequency bands.

In a possible implementation, the first switching delay is an item in a first switching set, and the first switching set includes 0 microseconds and 35 microseconds.

In a possible implementation, the method further includes: The network device sends second information to the terminal device, where the second information indicates a target frequency band group identifier, the target frequency band group identifier indicates the terminal device to perform frequency band switching in a target frequency band group corresponding to the target frequency band group identifier, and the target frequency band group identifier is one or more of the N frequency band group identifiers.

According to a fifth aspect, a communication method is provided. The method may be performed by a network device (for example, a base station), or may be performed by a component (for example, a chip or a circuit) of a network device. This is not limited.

The method includes: The network device receives third information from a terminal device, where the third information includes at least a j^{th} second switching delay, the j^{th} second switching delay is a delay for switching by the terminal device between a first frequency band group and a second frequency band group, the j^{th} second switching delay is one of M second switching delays, the first frequency band group and the second frequency band group each include at least one frequency band, and M is a positive integer; and the terminal device determines scheduling of uplink data based on the third information.

In a possible implementation, the third information further includes at least a first frequency band group identifier and a second frequency band group identifier.

In a possible implementation, the method further includes: The network device sends frequency band group identification information to the network device, where the frequency band group identification information includes at least the first frequency band group identifier and the second frequency band group identifier.

In a possible implementation, the third information further includes quantities of transmit radio frequency chains supported by the terminal device in the frequency bands included in the first frequency band group and the second frequency band group.

In a possible implementation, the second switching delay is an item in a second switching set, and the second switching set includes 140 microseconds, 210 microseconds, and 280 microseconds.

In a possible implementation, the frequency band group identification information includes X frequency band group identifiers, X is a positive integer, and the method further includes: The network device sends fourth information to the terminal device, where the fourth information indicates target frequency band group identifiers, the target frequency band group identifiers are used to perform frequency band switching between target frequency band groups corresponding to the target frequency band group identifiers, and the target frequency band group identifiers are at least two of the X frequency band group identifiers.

In a possible implementation, the third information further includes at least a j^{th} frequency band group switching identifier, and the j^{th} frequency band group switching identifier is an identifier of switching by the terminal device between the first frequency band group and the second frequency band group.

In a possible implementation, the method further includes: The network device sends frequency band group switching identification information to the terminal device, where the frequency band group switching identification information includes at least the j^{th} frequency band group switching identifier.

In a possible implementation, the third information further includes quantities of transmit radio frequency chains supported by the terminal device in the frequency bands included in the first frequency band group and the second frequency band group that are identified by the j^{th} frequency band group switching identifier.

In a possible implementation, the second switching delay is an item in a third switching set, and the third switching set includes 0 microseconds, 35 microseconds, 140 microseconds, 210 microseconds, and 280 microseconds.

In a possible implementation, the frequency band group switching identifier includes Y frequency band group switching identifiers, Y is a positive integer, and the method further includes: The network device sends fifth information to the terminal device, where the fifth information indicates a target frequency band group switching identifier, the target frequency band group switching identifier indicates the terminal device to perform frequency band switching between target frequency band groups corresponding to the target frequency band group switching identifier, and the target frequency band group switching identifier is one or more of the Y frequency band group switching identifiers.

According to a sixth aspect, a communication method is provided. The method may be performed by a network device (for example, a base station), or may be performed by a component (for example, a chip or a circuit) of a network device. This is not limited.

The method includes: The network device receives sixth information from a terminal device, where the sixth information includes a third switching delay, the third switching delay is a delay for switching by the terminal device from a first state to a second state, the first state is that the terminal device supports a first quantity of transmit radio frequency chains in a frequency band in a seventh frequency band group, the second state is that the terminal device supports a second quantity of transmit radio frequency chains in a frequency band in an eighth frequency band group, and the seventh frequency band group and the eighth frequency band group each include at least one frequency band; and the terminal device sends the sixth information to the network device, where the sixth information includes the third switching delay.

In this application, the seventh frequency band group and the eighth frequency band each may include at least one frequency band. For example, the method can also be understood as follows: The network device receives the sixth information, where the sixth information includes the third switching delay, the third switching delay is the delay for switching by the terminal device from the first state to the second state, the first state is that the terminal device supports a first quantity of transmit radio frequency chains in at least one a^{th} frequency band, and the second state is that the terminal device supports a second quantity of transmit radio frequency chains in at least one b^{th} frequency band; and the terminal device sends the sixth information to the network device, where the sixth information includes the third switching delay.

In a possible implementation, the third switching delay is 280 microseconds.

In a possible implementation, the third switching delay is an item in a fourth switching set, and the fourth switching set includes at least 0 microseconds, 35 microseconds, 140 microseconds, 210 microseconds, and 280 microseconds.

In a possible implementation, the third switching delay is used by the network device to determine scheduling of uplink data.

In a possible implementation, the third switching delay is an item in a fourth switching set, and a value in the fourth switching set is greater than or equal to 0 and less than or equal to 1 millisecond. Alternatively, a value in the fourth switching set may be greater than or equal to duration of three slots or duration of four slots.

In a possible implementation, the sixth information further includes a seventh frequency band group identifier and an eighth frequency band group identifier.

In a possible implementation, the sixth information further includes a quantity of transmit radio frequency chains supported by the terminal device in a frequency band in the seventh frequency band group and a quantity of transmit radio frequency chains supported by the terminal device in a frequency band in the eighth frequency band group.

According to a seventh aspect, a communication apparatus is provided. The apparatus is configured to perform the method according to any one of the possible implementations of the first aspect to the third aspect. Specifically, the apparatus may include units and/or modules, for example, a transceiver unit and/or a processing unit, configured to perform the method according to any one of the possible implementations of the first aspect to the third aspect.

In an implementation, the apparatus is a terminal device. When the apparatus is a communication device, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is a chip, a chip system, or a circuit used in a communication device, a communication unit may be an input/output interface, an interface circuit, an output circuit, an input circuit, a pin, a related circuit, or the like of the chip, the chip system, or the circuit, and the processing unit may be at least one processor, processing circuit, logic circuit, or the like.

According to an eighth aspect, a communication apparatus is provided. The apparatus is configured to perform the method according to any one of the possible implementations of the fourth aspect to the sixth aspect. Specifically, the apparatus may include units and/or modules, for example, a transceiver unit and/or a processing unit, configured to perform the method according to any one of the possible implementations of the fourth aspect to the sixth aspect.

In an implementation, the apparatus is a network device. When the apparatus is a communication device, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is a chip, a chip system, or a circuit used in a communication device, a communication unit may be an input/output interface, an interface circuit, an output circuit, an input circuit, a pin, a related circuit, or the like of the chip, the chip system, or the circuit, and the processing unit may be at least one processor, processing circuit, logic circuit, or the like.

According to a ninth aspect, a communication apparatus is provided. The apparatus includes at least one processor, configured to execute a computer program or instructions stored in a memory, to perform the method according to any possible implementation of any one of the first aspect to the third aspect. Optionally, the apparatus further includes the memory, configured to store the computer program or instructions. Optionally, the apparatus further includes a communication interface, and the processor reads, through the communication interface, the computer program or instructions stored in the memory.

In an implementation, the apparatus is a terminal device.

In another implementation, the apparatus is a chip, a chip system, or a circuit used in a terminal device.

According to a tenth aspect, a communication apparatus is provided. The apparatus includes at least one processor, configured to execute a computer program or instructions stored in a memory, to perform the method according to any one of the possible implementations of any one of the fourth aspect to the sixth aspect. Optionally, the apparatus further includes the memory, configured to store the computer program or instructions. Optionally, the apparatus further includes a communication interface, and the processor reads, through the communication interface, the computer program or instructions stored in the memory.

In an implementation, the apparatus is a network device.

In another implementation, the apparatus is a chip, a chip system, or a circuit used in a network device.

According to a tenth aspect, this application provides a processor, including an input circuit, an output circuit, and a processing circuit. The processing circuit is configured to receive a signal through the input circuit and transmit a signal through the output circuit, so that the processor performs the method according to any possible implementation of any one of the first aspect to the sixth aspect.

In a specific implementation process, the processor may be one or more chips, the input circuit may be an input pin, the output circuit may be an output pin, and the processing circuit may be a transistor, a gate circuit, a trigger, any logic circuit, or the like. The input signal received through the input circuit may be received and input by, for example, but not limited to, a transceiver. The signal output through the output circuit may be output to, for example, but not limited to, a transmitter and transmitted by the transmitter. The input circuit and the output circuit may be one circuit, and the circuit serves as an input circuit and an output circuit at different moments. Specific implementations of the processor and the circuits are not limited in this embodiment of this application.

Sending, obtaining/receiving, and other operations related to the processor can be understood as output, receiving, input, and other operations performed by the processor, or can be understood as sending, receiving, and other operations performed by a radio frequency circuit and an antenna, unless otherwise specified or the operations contradict actual functions or internal logic of the operations in related descriptions. This is not limited in this application.

According to an eleventh aspect, a processing device is provided, including a processor and a memory. The processor is configured to: read instructions stored in the memory, receive a signal through a transceiver, and transmit a signal through a transmitter, to perform the method according to any possible implementation of any one of the first aspect to the sixth aspect.

Optionally, there are one or more processors and one or more memories.

Optionally, the memory may be integrated with the processor, or the memory and the processor are disposed separately.

In a specific implementation process, the memory may be a non-transitory (non-transitory) memory, for example, a read-only memory (read-only memory, ROM). The memory and the processor may be integrated into one chip, or may be disposed in different chips. A type of the memory and a manner in which the memory and the processor are disposed are not limited in this embodiment of this application.

It should be understood that related data exchange processes such as sending of indication information may be a process of outputting the indication information from the processor, and receiving of capability information may be a process of receiving the input capability information by the processor. Specifically, data output by the processor may be output to the transmitter, and input data received by the processor may come from the transceiver. The transmitter and the transceiver may be collectively referred to as transceivers.

The processing device in the eleventh aspect may be one or more chips. The processor in the processing device may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a twelfth aspect, a computer-readable storage medium is provided. The computer-readable medium stores program code to be executed by a device, and the program code includes instructions used for performing the method according to any one of the possible implementations of the first aspect to the sixth aspect.

According to a thirteenth aspect, a computer program product including instructions is provided. When the computer program product runs on a computer, the computer is enabled to perform the method according to any one of the possible implementations of the first aspect to the sixth aspect.

According to a fourteenth aspect, a chip system is provided. The chip system includes a processor, configured to invoke a computer program from a memory and run the computer program, so that a device on which the chip system is installed performs the method according to the implementations of any one of the first aspect to the sixth aspect.

According to a fourteenth aspect, a communication system is provided. The communication system includes the terminal device and the network device. The terminal device is configured to perform the method according to any possible implementation of any one of the first aspect to the third aspect, and the network device is configured to perform the method according to any possible implementation of any one of the fourth aspect to the sixth aspect.

### BRIEF DESCRIPTION OF DRAWINGS

FIG. 1 is a diagram of an application scenario according to an embodiment of this application;
FIG. 2 is a schematic flowchart of a communication method 200 according to this application;
FIG. 3 is a schematic flowchart of a communication method 300 according to this application;
FIG. 4 is a schematic flowchart of a communication method 600 according to this application;
FIG. 5 is a block diagram of a communication apparatus 100 according to this application; and
FIG. 6 is a block diagram of a communication apparatus 200 according to this application.

### DESCRIPTION OF EMBODIMENTS

The following describes technical solutions of embodiments in this application with reference to accompanying drawings.

Wireless communication systems to which embodiments of this application can be applied include but are not limited to a global system for mobile communications (global system for mobile communications, GSM), a long term evolution (long term evolution, LTE) frequency division duplex (frequency division duplex, FDD) system, an LTE time division duplex (time division duplex, TDD) system, an LTE system, a long term evolution (LTE-Advanced, LTE-A) advanced system, a next-generation communication system (for example, a 6G communication system), a system integrating a plurality of access systems, or an evolved system.

The technical solutions provided in this application can also be applied to machine type communication (machine type communication, MTC), long term evolution-machine type communication (long term evolution-machine, LTE-M), a device-to-device (device-to-device, D2D) network, a machine-to-machine (machine-to-machine, M2M) network, an internet of things (internet of things, IoT) network, or other networks. The IoT network may include, for example, an internet of vehicles. Communication modes in an internet of vehicles system are collectively referred to as vehicle to X (vehicle to X, V2X, where X can stand for everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

A terminal device in embodiments of this application may include various access terminals, mobile devices, user terminals, or user apparatuses that have wireless communication functions. For example, the terminal device may be user equipment (user equipment, UE), for example, a mobile phone (mobile phone), a tablet computer (pad), a computer having wireless sending and receiving functions, a virtual reality (virtual reality, VR) terminal device, or an augmented reality (augmented reality, AR) terminal device. Alternatively, the terminal device may be a wireless terminal in industrial control (industrial control), a machine type communication (machine type communication, MTC) terminal, a customer premises equipment (customer premises equipment, CPE), a wireless terminal in self-driving (self-driving), a wireless terminal in a telemedicine (remote medical) application, a wireless terminal in a smart grid (smart grid), a wireless terminal in transportation security (transportation safety), a wireless terminal in a smart city (smart city), a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like.

A network device (for example, a radio access network device) in embodiments of this application may be an access device that is in a mobile communication system and to which the terminal device is connected wirelessly. The radio access network device may be a base station, an evolved base station (evolved NodeB, eNB), or a home NodeB; an access point (access point, AP), a wireless relay node, a wireless backhaul node, a transmission point (transmission point, TP), or a transmission and reception point (transmission and reception point, TRP) in a wireless fidelity (wireless fidelity, Wi-Fi) system; or a macro base station, a micro base station, a high-frequency base station, or the like. Alternatively, the radio access network device may be a next-generation NodeB (next generation NodeB, gNB) in an NR system, or may be a component or some devices that constitute a base station, for example, a central unit (central unit, CU), a distributed unit (distributed unit, DU), or a baseband unit (baseband unit, BBU). It should be understood that a specific technology and a specific device form that are used by the radio access network device are not limited in embodiments of this application. In this application, the radio access network device is referred to as a network device for short. Unless otherwise specified, in this application, all network devices are radio access network devices. In this application, the network device may be the network device itself, or may be a chip used in the network device to complete a wireless communication processing function.

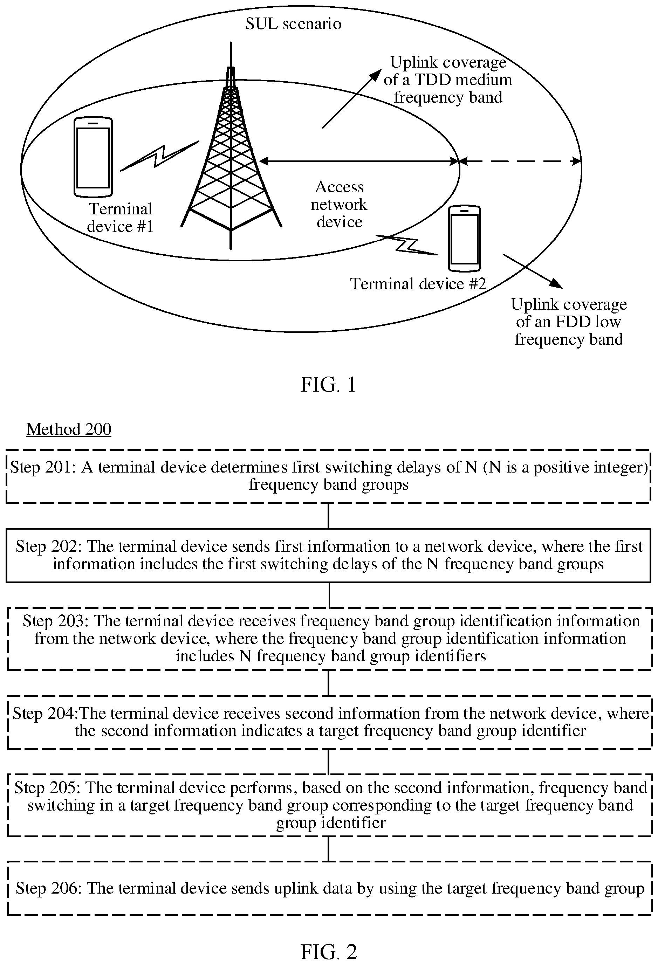

It should be understood that a scenario shown in FIG. 1 is merely an example scenario used in the technical solutions of this application. In this application, a terminal device may also need to switch between a plurality of frequency bands in other scenarios. In other words, the technical solutions of this application can be applied to various scenarios in which a terminal device needs to switch between a plurality of frequency bands.

In a 5G new radio (new radio, NR) system, a network device (for example, a base station) may transmit a radio wave to a quite long distance at high transmit power. However, transmit power of a terminal device is low, and uplink coverage is limited. Consequently, when arriving at the network device, an uplink transmitted signal may do not have enough received signal strength to ensure coverage performance of the terminal device. In addition, an uplink spectrum may be insufficient. Therefore, it is impossible to ensure uplink coverage performance of the terminal device through data retransmission.

FIG. 1 is a diagram of a scenario to which technical solutions of this application are applicable. As shown in FIG. 1, at present, a supplementary uplink (supplementary uplink, SUL) is used in NR as an alternative when uplink coverage in the NR system is insufficient. Because a low frequency band in long term evolution (long term evolution, LTE) usually has better coverage performance, for the SUL, a carrier in a lower frequency band (for example, 700 MHz, 1.8 GHz, or 2.1 GHz) in LTE is considered to be used for NR uplink transmission. Currently, it is determined that when performing NR transmission by using an LTE frequency band, the terminal device may reuse the frequency band with LTE uplink time division duplex (time division duplex, TDD). To be specific, when the terminal device is in a coverage area of a TDD medium frequency band (2.6 GHz, 3.5 GHz, or 4.9 GHz), the terminal device uses the TDD medium frequency band. When the terminal device moves out of the coverage area of the TDD medium frequency band (2.6 GHz, 3.5 GHz, or 4.9 GHz), the terminal device may use an LTE low frequency band in an uplink. This supplements uplink coverage of the TDD medium frequency band, and extends an uplink coverage area. Certainly, with future evolution, the terminal device may alternatively use another frequency band in the uplink as a supplementary uplink, to further extend the uplink coverage area.

It can also be understood that when the terminal device transmits uplink data in an NR frequency band (band) (for example, 2.6 GHz), a carrier in a lower frequency band (for example, 700 MHz/800 MHz/900 MHz, 1.8 GHz, or 2.1 GHz) in LTE may be used for NR uplink transmission. The carrier can be understood as an SUL frequency band. In other words, in an SUL scenario, the terminal device is expected to dynamically switch between a plurality of frequency bands such as 700 MHz/800 MHz/900 MHz, 1.8 GHz, 2.1 GHz, 3.5 GHz, or 4.9 GHz based on a channel status or a load status of a corresponding frequency band.

For ease of understanding the technical solutions of this application, the following briefly describes several technical terms used in this application.

Switching delay of a phase-locked loop (phase-locked loop, PLL): Generally, it takes approximately 300 microseconds to relock a phase-locked loop to a frequency band. Specifically, if a phase-locked loop corresponding to a frequency band is disabled, the phase-locked loop is relocked to another frequency band or a new phase-locked loop is enabled, and such a switching delay is needed in these cases.

A transmit channel (transmitter, Tx) may be referred to as a "radio frequency (radio frequency, RF) transmit channel", which may be referred to as a "transmit channel" for short. In this application, the transmit channel may operate in, but not limited to, the following manner: The transmit channel may receive a baseband signal from a baseband chip, perform radio frequency processing (such as up-conversion, amplification, and filtering) on the baseband signal to obtain a radio frequency signal, and finally radiate the radio frequency signal to space by using an antenna. For example, the transmit channel may include electronic components such as an antenna switch, an antenna tuner, a low noise amplifier (low noise amplifier, LNA), a power amplifier (power amplifier, PA), a mixer (mixer), a local oscillator (local oscillator, LO), and a filter (filter). These electronic components may be integrated into one or more chips depending on a requirement. The antenna may also be considered as a part of the transmit channel sometimes.

A "channel" mentioned in the following embodiments of this application can also be understood as a "radio frequency chain". The radio frequency chain in this application may be replaced with Tx, an antenna, a radio frequency, a transmit channel, a transmit port, a receive channel, or any combination thereof. Details are not described below again.

It should be understood that a "frequency band" (band) mentioned in embodiments of this application can also be understood as a "band", a "frequency", and a "spectrum". A "frequency band" in this application can also be understood as a component carrier (component carrier, CC) (which may be referred to as a "carrier" for short), that is, the technical solutions of this application are also completely applicable to a "carrier". A "frequency band" is mainly used as an example for description in the following embodiments of this application.

In this application, a transmit radio frequency chain can also be understood as a radio frequency chain that is used for sending or transmission, or that can be used for sending or transmission. Correspondingly, a quantity of transmit radio frequency chains can be understood as a quantity of radio frequency chains that are used for sending or transmission, or that can be used for sending or transmission. A quantity of transmit radio frequency chains can also be understood as "a quantity of layers", "a quantity of antenna layers", or "a quantity of channels".

"Switching" (switch) mentioned in embodiments of this application can also be understood as "switchover". A "switching delay" mentioned in embodiments of this application can also be understood as "carrier switching delay", "carrier switchover delay", "carrier switching period (period or interval)", or "switching gap (gap)". The "switching delay" mentioned in embodiments of this application may also be referred to as "a switching time (switching time) in a carrier switching preparation time" or "a switching time (switching time) in a switching preparation advance". Correspondingly, when performing uplink scheduling, the network device performs corresponding scheduling processing based on a switching delay. Specifically, the scheduling processing can be understood as setting N2 (N2 can be understood as an uplink processing delay or an uplink preparation delay). Details are not described below again.

At present, the terminal device has two phase-locked loops, and may dynamically switch between two frequency bands. However, in consideration of costs, hardware complexity, and the like of the terminal device, only a few phase-locked loops are configured for the terminal device. It can also be understood that a quantity of phase-locked loops of the terminal device is basically invariable, but the terminal device may need to switch between a plurality of frequency bands. In other words, when the terminal device needs to switch between a plurality of frequency bands, a switching delay of the phase-locked loops is longer. As a result, flexibility of switching by the terminal device between the plurality of frequency bands is limited, and data transmission performance is affected. Therefore, when a quantity of phase-locked loops of the terminal device does not match a quantity of frequency bands, how the terminal device flexibly and effectively completes switching between a plurality of frequency bands to ensure data transmission performance becomes a technical issue to be resolved.

In view of this, this application provides a communication method and apparatus. A terminal device may report first switching delays of N frequency band groups, where a first switching delay is a delay for switching by the terminal device between at least two different frequency bands included in a frequency band group. In other words, the terminal device reports the delays for switching in the frequency band groups, so that the terminal device can effectively perform frequency band switching in the frequency band groups, that is, the terminal device can flexibly and effectively switch between a plurality of frequency bands, thereby ensuring data transmission performance.

FIG. 2 is a schematic flowchart of a communication method 200 according to this application. The following describes steps shown in FIG. 2. It should be noted that steps represented by dashed lines in FIG. 2 are optional. This is not repeated below.

Step 201: A terminal device determines first switching delays of N (N is a positive integer) frequency band groups.

The N frequency band groups include an i^{th} frequency band group, and the first switching delays of the N frequency band groups include an i^{th} first switching delay. In this application, the i^{th} first switching delay is a delay for switching by the terminal device between at least two different frequency bands included in the i^{th} frequency band group.

A "frequency band group" mentioned in this application can be understood as a "frequency band set". A "frequency band" may be replaced with a "carrier", a "band", or "a carrier in a frequency band". A "frequency band group" may be replaced with a "carrier group" or a "carrier set". "In a frequency band" can be understood as "on a carrier in a frequency band".

In this application, a frequency band included in a frequency band group #1 (for example, a first frequency band group) and a frequency band included in a frequency band group #2 (for example, a second frequency band group) may be completely different frequency bands. Alternatively, a frequency band included in the frequency band group #1 and a frequency band included in the frequency band group #2 may have an intersection set. In other words, in this application, the frequency band in the frequency band group #1 and the frequency band in the frequency band group #2 are incompletely the same, that is, the two groups may have a same frequency band, or may have different frequency bands.

In this application, a frequency band group may include at least one frequency band.

It should be understood that in this application, all of the N frequency band groups may be preconfigured by a network device. For example, the network device may perform preconfiguration as follows: The frequency band group #1 includes {frequency band #A and frequency band #B}, the frequency band group #2 may include { frequency band #A and frequency band #C}, a frequency band group #3 may include {frequency band #A, frequency band #B, and frequency band #C}, and so on.

For example, the frequency band #A may be 3.5 GHz, the frequency band #B may be 2.1 GHz, the frequency band #C may be 1.8 GHz, a frequency band #D may be 700 MHz/800 MHz/900 MHz, and so on.

When a "frequency band" in this application is understood as a "carrier", for example, the frequency band #A supports three carriers: a carrier #1, a carrier #2, and a carrier #3; the frequency band #B supports four carriers: a carrier #4, a carrier #5, a carrier #6, and a carrier #7; the frequency band #C supports two carriers: a carrier #8 and a carrier #9; and the frequency band #D supports two carriers: a carrier #10 and a carrier #11. That "the frequency band group #1 includes {frequency band #A and frequency band #B}" may mean that a carrier group #1 includes the carrier #1 and the carrier #6. That "the frequency band group #2 may include {frequency band #A and frequency band #C}" may mean that a carrier group #2 includes the carrier #8 and the carrier #3.

In this application, the following switching in a frequency band group can also be understood as, for example, switching between the carrier #1 and the carrier #6 in the carrier group #1, or for another example, switching between the carrier #3 and the carrier #8 in the carrier group #2. The following switching between frequency band groups (for example, switching between the frequency band group #1 and the frequency band group #2) can also be understood as switching between carrier groups (for example, switching between the carrier group #1 and the carrier group #2).

In a possible implementation, the network device may semi-statically configure frequency band groups. For example, the network device may configure a frequency band group for the terminal device once every five slots. For example, the terminal device may pre-lock a phase-locked loop to a corresponding frequency band in the five slots.

In a possible implementation, in this application, each of the N frequency band groups may be corresponding to one first switching delay. In another possible implementation, some of the N frequency band groups may be corresponding to a same first switching delay. It can also be understood that, when determining the first switching delays corresponding to the N frequency band groups, the terminal device may select a first switching delay for each frequency band group, or may select a same switching delay for several frequency band groups. In other words, a specific internal implementation of the terminal device is not limited in this application.

In step 201, that "a terminal device determines first switching delays of N frequency band groups" can be understood as follows: For example, a first switching set may be preconfigured on the terminal device (or may be "predefined in a protocol"), the first switching set includes different first switching delays. The terminal device may select the corresponding first switching delays for the N frequency band groups from the first switching set. For example, values in the first switching set may be less than or equal to 35 microseconds. For example, the first switching set may include {0 microseconds, 30 microseconds, and 35 microseconds}, the first switching set may include {0 microseconds and 35 microseconds}, or the first switching set may include {0 microseconds, 15 microseconds, 20 microseconds, and 35 microseconds}.

In this application, it is assumed that the terminal device has two phase-locked loops. When the terminal device switches between the frequency band #A and the frequency band #B in the frequency band group, the following scenario is considered: It is assumed that a phase-locked loop #1 is locked to the frequency band #A, a phase-locked loop #2 may be pre-locked to the frequency band #B, the frequency band #A is on a channel #1, and the frequency band #B is on a channel #2 (it can also be understood that the frequency band #A and the frequency band #B are on different channels). In this case, because the phase-locked loop is also pre-locked to the frequency band #B, the terminal device can seamless switch between the frequency band #A and the frequency band #B in the frequency band group, that is, a switching delay is 0 microseconds. In other words, in this application, based on the foregoing scenario, it is further proposed that switching between two different frequency bands in a frequency band group needs 0 microseconds. In this way, a delay for switching by the terminal device between the two frequency bands can be greatly reduced, and switching can be completed more effectively. This ensures data transmission performance. If both the frequency band #A and the frequency band #B may be on the channel #1, because the phase-locked loop is also pre-locked to the frequency band #B in this case, when the terminal device switches between the frequency band #A and the frequency band #B in the frequency band group, only a delay for switching between the frequency bands on a channel is needed (for example, the frequency band #A is on the channel #1 previously, the frequency band on the channel #1 needs to be switched to the frequency band #B, and only switching between the frequency bands ("frequencies") on the channel is needed) (namely, a channel switching delay). The switching delay is 35 microseconds.

In this application, step 201 is an optional step, that is, the terminal device may not perform step 201. In this case, it can also be understood that a "determining" action does not need to be performed in an internal implementation of the terminal device, and step 202 is directly performed.

Step 202: The terminal device sends first information to the network device, where the first information includes the first switching delays of the N frequency band groups.

Correspondingly, the network device may receive the first information, and determine scheduling of uplink data based on the first information.

For example, the terminal device may report first capability information (an example of the first information) to the network device, where the capability information includes the first switching delays corresponding to the N frequency band groups.

In an example, the terminal device reports the first capability information, where the first capability information includes the first switching delays being 0 seconds. In this case, that the first switching delays are 0 microseconds can be understood as follows: For example, the switching delays for switching by the terminal device between different frequency bands in the N frequency band groups may be 0 microseconds; delays for switching by the terminal device between different frequency bands included in the first X₁ frequency band groups of the N frequency band groups are all 0 microseconds; or delays for switching by the terminal device between different frequency bands included in the last Yi frequency band groups of the N frequency band groups are all 0 microseconds. Values of X₁ and Y₁ may be predefined in a protocol or preconfigured by the network device. This is not limited.

In another example, the terminal device reports the first capability information, where the first capability information includes the first switching delays being 0 seconds and 35 microseconds. For example, it can be understood as follows: Delays for switching by the terminal device between different frequency bands in the first X₂ frequency band groups of the N frequency band groups are all 0 microseconds; or delays for switching by the terminal device between different frequency bands in the last Y₂ frequency band groups of the N frequency band groups are 35 microseconds. Values of X₂ and Y₂ may be predefined in a protocol or preconfigured by the network device. This is not limited.

In an implementation, the first information may further include quantities of transmit radio frequency chains supported by the terminal device in the at least two different frequency bands, and the first capability information is used by the network device to determine scheduling of the uplink data.

In an example, the first information sent by the terminal device may include data of radio frequency chains supported in the frequency band #A and a quantity of radio frequency chains supported in the frequency band #B in the frequency band group #1 {frequency band #A and frequency band #B}. For example, the frequency band #A supports two radio frequency chains, and the frequency band #B supports two radio frequency chains. For another example, the frequency band #A supports two radio frequency chains, and the frequency band #B supports one radio frequency chain. For still another example, the frequency band #A supports one radio frequency chain, and the frequency band #B supports one radio frequency chain. The network device may determine, based on the first switching delays of the frequency band groups and/or the quantities of radio frequency chains supported in the frequency bands in the frequency band groups, to schedule the data to the terminal device, where the first switching delays and the quantities of radio frequency chains are reported by the terminal device.

Before step 202, step 203 may be further included: The terminal device receives frequency band group identification information from the network device, where the frequency band group identification information includes N frequency band group identifiers.

In a possible implementation, in this application, the frequency band group identifiers may also be predefined in a protocol or preconfigured.

Correspondingly, the network device sends the frequency band group identification information to the terminal device. For example, the network device may send the frequency band group identification information to the terminal device by using radio resource control (radio resource control, RRC) signaling, media access control (media access control, MAC) signaling, or the like.

A sequence between step 201 and step 203 may not be limited. For example, the terminal device may receive the frequency band group identification information from the network device after determining the first switching delays of the N frequency band groups. For another example, the terminal device may first receive the frequency band group identification information from the network device, and then determine the first switching delays of the N frequency band groups. For still another example, the terminal device may receive the frequency band group identification information from the network device while determining the first switching delays of the N frequency band groups. This is not limited in this application.

For example, in this application, the network device may configure the N frequency band group identifiers for the terminal device, where the N frequency band group identifiers may be in one-to-one correspondence with the N frequency band groups. Further, in this case, the N frequency band group identifiers may be in one-to-one correspondence with the switching delays of the N frequency band groups.

For example, the terminal device receives the frequency band group identification information from the network device, where the frequency band group identification information includes a frequency band group identifier #1 (for example, a group #1), a frequency band group identifier #2 (for example, a group #2), a frequency band group identifier #3 (for example, a group #3), and the like. For example, a frequency band group identified by the group #1 is {frequency band #A and frequency band #D}. For another example, a frequency band group identified by the group #2 is {frequency band #B and frequency band #D}. For still another example, a frequency band group identified by the group #3 is {frequency band #C and frequency band #D}.

In this case, the first information sent by the terminal device in step 202 may further include an i^{th} frequency band group identifier, where the i^{th} frequency band group identifier is any one of the N frequency band group identifiers.

In an example, the terminal device reports the first capability information, where the first capability information includes {frequency band group identifier #1 and first switching delay being 0 microseconds}, {frequency band group identifier #2 and first switching delay being 35 microseconds}, {frequency band group identifier #3 and first switching delay being 30 microseconds}, and the like.

Step 204: The terminal device receives second information from the network device, where the second information indicates a target frequency band group identifier.

Correspondingly, the network device sends the second information to the terminal device. For example, the network device may indicate the target frequency band group identifier by using downlink control information (downlink control information, DCI).

In this application, the target frequency band group identifier may be one or more of the N frequency band group identifiers. For example, the network device configures the N frequency band group identifiers for the terminal device, where the target frequency band group identifiers may be the frequency band group identifier #2, a frequency band group identifier #5, and a frequency band group identifier #6 of the N frequency band group identifiers.

Step 205: The terminal device performs, based on the second information, frequency band switching in a target frequency band group corresponding to the target frequency band group identifier.

For example, the terminal device may perform, based on the target frequency band group identifier indicated by the second information, frequency band switching in the target frequency band group corresponding to the target frequency band group identifier.

Step 206: The terminal device sends the uplink data by using the target frequency band group.

It can also be understood that the network device may schedule, to the terminal device based on the first switching delays reported by the terminal device, a resource matching the first switching delays, so that the terminal device can flexibly and effectively perform frequency band switching, thereby improving data transmission performance.

A "resource" in this application can be understood as a time domain resource, a frequency domain resource, a physical resource block, a resource block, or the like. This is not limited.

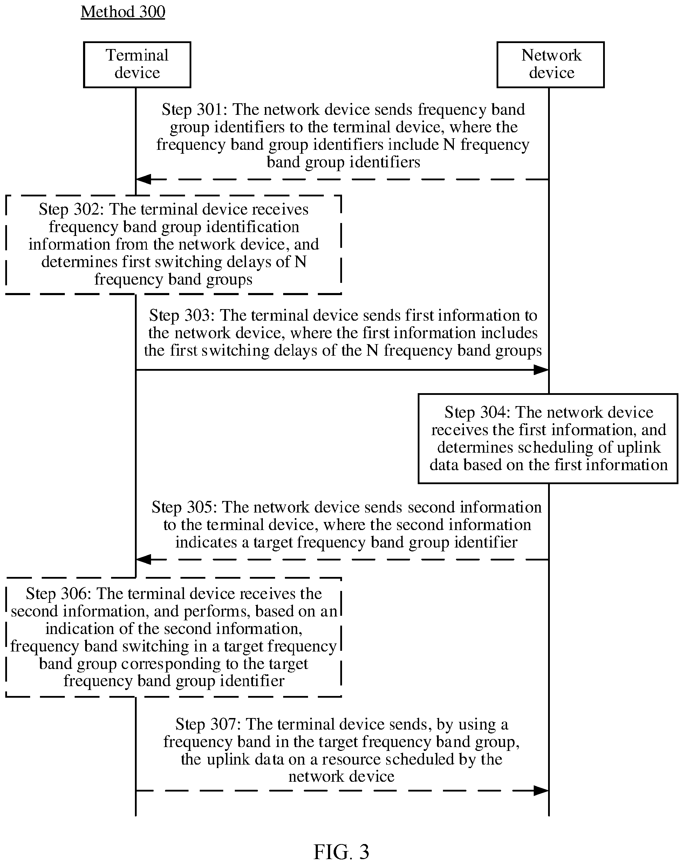

FIG. 3 shows a communication method 300 according to this application. The method 300 illustrates steps of a specific embodiment in the technical solutions of this application from a perspective of interaction between a terminal device and a network device. The method 300 includes the following steps.

In this application, the network device may preconfigure frequency band groups. For example, the network device may perform preconfiguration as follows: A frequency band group #1 includes {frequency band #A and frequency band #B}, a frequency band group #2 may include { frequency band #A and frequency band #C}, a frequency band group #3 may include {frequency band #A, frequency band #B, and frequency band #C}, and so on.

In a possible implementation, the network device may perform semi-static configuration. For details, refer to the descriptions in the method 200. Details are not described herein again.

Step 301: The network device sends frequency band group identification information to the terminal device, where the frequency band group identification information includes N frequency band group identifiers.

In a possible implementation, in this application, the frequency band group identifiers may be predefined in a protocol or preconfigured.

In this application, for example, the N frequency band group identifiers may be in one-to-one correspondence with N frequency band groups.

For example, the network device may send RRC signaling to the terminal device, where the RRC signaling includes the N frequency band group identifiers. For example, a frequency band group identifier #1 (for example, a group #1) identifies the frequency band group #1 {frequency band #A and frequency band #B}, a frequency band group identifier #2 (for example, a group #2) identifies the frequency band group #2 {frequency band #A and frequency band #C}, a frequency band group identifier #3 (for example, a group #3) identifies the frequency band group #3 {frequency band #A, frequency band #B, and frequency band #C}, and so on.

Step 302: The terminal device receives the frequency band group identification information from the network device, and determines first switching delays of the N frequency band groups.

In this application, for example, the first switching delays of the N frequency band groups may be in one-to-one correspondence with the N frequency band group identifiers.

For example, the terminal device may determine that a first switching delay corresponding to the group #1 is 0 microseconds, a first switching delay corresponding to the group #2 is 35 microseconds, and so on. Specifically, the terminal device may select a corresponding switching delay for each frequency band group from a first switching set. For descriptions of values in the "first switching set", refer to the descriptions in the method 200 for understanding. Details are not described herein again.

It should be noted that in this application, value sets in the first switching set, a second switching set, a third switching set, and a fourth switching set are merely used as examples. For example, the first switching set may be alternatively a set including 35 microseconds and 140 microseconds. For another example, the first switching set may be alternatively a set including 0 microseconds, 35 microseconds, and 140 microseconds. Correspondingly, values in the second switching set, the third switching set, and the fourth switching set in the following embodiments are also merely used as examples, and each switching set may be alternatively a set including other values. In this application, switching sets (for example, the first switching delay set and the second switching delay set) may have an intersection set, or may be completely different sets.

Further, when determining the first switching delay corresponding to each frequency band group, the terminal device may further consider a quantity of radio frequency chains supported in each frequency band. For example, the frequency band #A supports two radio frequency chains (a "radio frequency chain" may also be denoted as "Tx"), the frequency band #B supports two radio frequency chains, and the frequency band #C supports transmission by two radio frequency chains. Alternatively, the frequency band #A supports two radio frequency chains, the frequency band #B supports one radio frequency chain, and the frequency band #C supports transmission by two radio frequency chains. Alternatively, the frequency band #A supports one radio frequency chain, the frequency band #B supports one radio frequency chain, the frequency band #C supports transmission by two radio frequency chains, and so on. For example, details are listed in Table 1.

**Table 1**

| First switching delay (microsecond) | Frequency band group identifier | Frequency band group |
|---|---|---|
| 0 | Group #1 | {Frequency band #A (2 Tx) and frequency band #B (2 Tx)} |
| 35 | Group #2 | {Frequency band #A (2 Tx) and frequency band #C (2 Tx)} |
| 35 | Group #3 | {Frequency band #A (2 Tx), frequency band #B (2 Tx), and frequency band #C (2 Tx)} |

For example, if the terminal device determines that the first switching delay of the group #1 is 0 microseconds, it indicates that a switching delay needed for switching by the terminal device between the frequency band #A and the frequency band #B (for example, switching from the two radio frequency chains supported in the frequency band #A to the two radio frequency chains supported in the frequency band #B, or switching from the two radio frequency chains supported in the frequency band #B to the two radio frequency chains supported in the frequency band #A) is 0.

For another example, if the terminal device determines that the first switching delay of the group #3 is 35 microseconds, the frequency band #A supports the two radio frequency chains, the frequency band #B supports the one radio frequency chain, and the frequency band #C supports the two radio frequency chains, it indicates that a switching delay needed for switching by the terminal device between every two frequency bands (for example, switching from the two radio frequency chains supported in the frequency band #A to the two radio frequency chains supported in the frequency band #B, switching from the two radio frequency chains supported in the frequency band #A to the two radio frequency chains supported in the frequency band #C, switching from the two radio frequency chains supported in the frequency band #B to the two radio frequency chains supported in the frequency band #A, switching from the two radio frequency chains supported in the frequency band #B to the two radio frequency chains supported in the frequency band #C, or the like) is 35 microseconds.

In this embodiment, the frequency band groups are distinguished from each other and the network device configures the frequency band group identifiers. In this way, the terminal device can report the first switching delays corresponding to the frequency band group identifiers (which can also be understood as reporting the first switching delays by the terminal device by using a frequency band group as a granularity). In comparison with an existing manner in which the terminal device reports switching delays by using each frequency band as a granularity, signaling overheads can be greatly reduced in this embodiment.

Step 303: The terminal device sends first information to the network device, where the first information includes the first switching delays of the N frequency band groups.

In a possible implementation, the terminal device may send first capability information (an example of the first information) to the network device, where the first capability information includes the first switching delays of the N frequency band groups. For example, the first switching delays are 0 microseconds and 35 microseconds. For details, refer to the descriptions of step 202 in the method 200 for understanding. Details are not described herein again.

In another possible implementation, the first capability information includes the frequency band group identifiers and the first switching delays corresponding to the frequency band group identifiers. For example, the first capability information includes {group #1 and first switching delay being 0 microseconds}, {group #2 and first switching delay being 35 microseconds}, and the like.

In still another possible implementation, the first capability information may further include quantities of transmit radio frequency chains supported in frequency bands in the frequency band groups, for example, a quantity of radio frequency chains supported in the frequency band #A and a quantity of radio frequency chains supported in the frequency band #B in the group #1 {frequency band #A and frequency band #B}. For example, the frequency band #A supports two radio frequency chains, and the frequency band #B supports two radio frequency chains. For another example, the frequency band #A supports two radio frequency chains, and the frequency band #B supports one radio frequency chain. For still another example, the frequency band #A supports one radio frequency chain, and the frequency band #B supports one radio frequency chain.

In a possible implementation, the first capability information may further include a switching delay needed for switching by the terminal device from a default state or a fallback state to a new frequency band. In this case, after the terminal device completes transmission in a current frequency band, the current frequency band may be further fallen back to a frequency band corresponding to the default state/fallback state. For example, the switching delay may be 35 microseconds. Falling back to the frequency band corresponding to the default state/fallback state indicates that a phase-locked loop is locked to the frequency band corresponding to the default state/fallback state. In this application, the default state/fallback state may be predefined, or may be preconfigured by the network device. In this application, preconfiguration can be understood as configuration performed by the network device by using RRC signaling.

In a possible implementation, the terminal device may further report an expected minimum value of at least one of K1 or K2, so that the network device can determine an appropriate value of K1 or K2 for the terminal device (specifically, for descriptions of K1 and K2, refer to descriptions of step 304).

Step 304: The network device receives the first information, and determines scheduling of uplink data based on the first information.

For example, the terminal device may determine K2 and/or K1 based on the first information. K2 is a delay (which may also be referred to as a data processing time or a data preparation time) for scheduling uplink data transmission, and K1 is a delay from scheduling a physical downlink shared channel (physical downlink shared channel, PDSCH) to feeding back a physical uplink control channel (physical uplink control channel, PUCCH). Specifically, for the descriptions of K2, refer to the technical specification (technical specification, TS) 38.214 in the 3rd generation partnership project (the 3rd generation partnership project, 3GPP) for understanding; and for the descriptions of K1, refer to the technical specification TS 38.213 in the 3GPP. Details are not described in this application.

In an example, the network device receives the first switching delays corresponding to the N frequency band groups, and determines scheduling of the uplink data based on the first information. For example, the network device may determine, based on the first switching delays corresponding to the frequency band groups, a slot and/or symbol resource (or a frame resource, a mini-slot resource, or the like, which is not limited) to be scheduled, and use the resource for data transmission in a switched frequency band. Specifically, assuming that the first information received by the network device includes the first switching delay being 35 microseconds corresponding to the group #2 ({frequency band #A and frequency band #C}), the network device may determine a resource for sending the uplink data by the terminal device. For example, a slot in which data is transmitted by using the frequency band #A and a slot in which data is transmitted by using the frequency band #B are separated by one symbol.

In another example, the network device receives the first switching delays corresponding to the N frequency band groups and the quantities of transmit radio frequency chains supported in the frequency bands in the N frequency band groups, and determines scheduling of the uplink data based on the first information. Specifically, the network device may schedule a resource for the uplink data to the terminal device based on the switching delay being 0 microseconds corresponding to the group #1 {frequency band #A and frequency band #B}, the two radio frequency chains supported in the frequency band #A, and the two radio frequency chains supported in the frequency band #B. For example, a slot in which data is transmitted by using the frequency band #A and a slot in which data is transmitted by using the frequency band #B are separated by one symbol.

Step 305: The network device sends second information to the terminal device, where the second information indicates a target frequency band group identifier.

For example, the network device may indicate the target frequency band group identifier by using DCI. In this application, the target frequency band group identifier may be one or more of the N frequency band group identifiers. For example, the network device configures the N frequency band group identifiers for the terminal device, where target frequency band group identifiers may be the group #1, a group #5, and a group #6 of the N frequency band group identifiers.

Step 306: The terminal device receives the second information, and performs, based on an indication of the second information, frequency band switching in a target frequency band group corresponding to the target frequency band group identifier.

In an example, it is assumed that the target frequency band group identifier indicated by the second information is the group #1. In this case, the terminal device may perform frequency band switching in the frequency band group {frequency band #B and frequency band #D} identified by the group #1. For example, the terminal device currently transmits data in a slot #1 (slot #1) by using the frequency band #B. It is assumed that a switching time that is reported by the terminal device and that is needed for switching in the frequency band group identified by the frequency band group identifier #2 is 0 microseconds (as described above, because the phase-locked loops are preconfigured and the two frequency bands are on different channels, the terminal device has no phase-locked loop switching delay). In this case, the network device may perform scheduling for the terminal device to transmit data in a slot #2 by using the frequency band #D. In other words, the terminal device may transmit data in two consecutive slots and contiguous symbols. For another example, it is assumed that a switching time that is reported by the terminal device and that is needed for switching in the frequency band group identified by the frequency band group identifier #2 is 35 microseconds (in this case, the terminal device has no phase-locked loop switching delay, but needs a channel switching delay). In this case, the network device may perform scheduling for the terminal device to transmit data starting from a 2^{nd} symbol or a 3^{rd} symbol in a slot #2 by using the frequency band #D. Based on different subcarrier spacings, quantities of symbols that need to be occupied by the switching time are different, and therefore quantities of symbols to be scheduled may be different.

In another example, when the terminal device cannot complete frequency band switching in a frequency band group in time in a slot scheduled by the network device (the network device may perform scheduling for the terminal device to transmit data starting from a 1^{st} symbol in a slot #2 by using the frequency band #D), the terminal device performs puncturing (puncture) on the uplink data. In this case, the network device may perform detection based on a quantity of originally scheduled uplink symbols, or may perform detection based on a quantity of symbols that may be reduced. For the latter case, a mask (mask) may be added to an uplink demodulation reference signal (UL DMRS) or scrambling may be performed on the UL DMRS, and a quantity of currently reduced symbols is indicated by using the mask or scrambling information, so that the network device can perform corresponding detection based on the quantity of reduced symbols. For example, the network device schedules thirteen symbols for uplink transmission. When a switching delay of the terminal device further needs to occupy one more symbol, that is, when the terminal device finds that one symbol is insufficient to be occupied by a delay for switching in a frequency band group, the terminal device punctures more symbols.

Optionally, encoding may be performed for uplink transmission of the terminal device based on 10 symbols. Optionally, the network device may detect that energy of first four symbols is 0, and perform decoding preferentially based on the 10 symbols, or may perform decoding many times based on even 11 symbols, 12 symbols, or 13 symbols. For example, the network device may perform detection directly based on 13 symbols, and precision is lost to some extent. However, this does not greatly affect performance for a lower-order modulation and coding scheme (modulation and coding scheme, MCS) (for example, non-256 quadrature amplitude modulation (quadrature amplitude modulation, QAM)).

Step 307: The terminal device sends the uplink data by using the target frequency band group.

For example, the terminal device may send, by using a frequency band in the target frequency band group, the uplink data on the resource scheduled by the network device.

Based on the method provided in this embodiment, the terminal device may report the first switching delays of the N frequency band groups, where a first switching delay is a delay for switching by the terminal device between at least two different frequency bands included in a frequency band group. In other words, the terminal device reports the delays for switching in the frequency band groups, and the network device may determine a K2 delay, so that the terminal device can effectively perform frequency band switching in the frequency band groups. In this way, the terminal device flexibly and effectively completes switching between a plurality of frequency bands, thereby ensuring data transmission performance.

This application further provides a communication method 400. The method 400 illustrates steps of another specific embodiment in the technical solutions of this application from a perspective of interaction between a terminal device and a network device. A procedure for the method 400 is similar to the procedure for the method 300. For details, refer to the procedure in FIG. 3 for understanding. Details are not described again.

In this embodiment, the network device may preconfigure frequency band groups. For example, the network device may perform preconfiguration as follows: A frequency band group #1 includes {frequency band #A and frequency band #B}, a frequency band group #2 may include { frequency band #A and frequency band #C}, a frequency band group #3 may include {frequency band #A, frequency band #B, and frequency band #C}, a frequency band group #4 may include {frequency band #D}, a frequency band group #5 may include {frequency band #A}, and so on.

It should be noted that a frequency band group in the method 300 includes at least two frequency bands. In comparison with the method 300, a frequency band group in the method 400 may include at least one frequency band. In other words, in the method 400, there may be a case in which there is only one frequency band in a frequency band group.

Step 401: The network device sends frequency band group identification information to the terminal device, where the frequency band group identification information includes at least a first frequency band group identifier and a second frequency band group identifier.

For example, the network device may send RRC signaling to the terminal device, where the RRC signaling includes X frequency band group identifiers. For example, a frequency band group identifier #1 (for example, a group #1) identifies the frequency band group #1 {frequency band #A and frequency band #B}, a frequency band group identifier #2 (for example, a group #2) identifies the frequency band group #2 {frequency band #A and frequency band #C}, a frequency band group identifier #3 (for example, a group #3) identifies the frequency band group #3 {frequency band #A, frequency band #B, and frequency band #C}, a frequency band group identifier #4 (for example, a group #4) identifies the frequency band group #4 {frequency band #D}, a frequency band group identifier #5 (for example, a group #5) identifies the frequency band group #5 {frequency band #A}, and so on.

Step 402: The terminal device receives the frequency band group identification information from the network device, and determines M (M is a positive integer) second switching delays.

In a possible implementation, in this application, the frequency band group identifiers may be predefined in a protocol or preconfigured.

For example, a j^{th} second switching delay is a delay for switching by the terminal device between a first frequency band group and a second frequency band group, and the j^{th} second switching delay is one of the M second switching delays. For another example, a k^{th} second switching delay is a delay for switching by the terminal device between a third frequency band group and a fourth frequency band group, and the k^{th} second switching delay is another one of the M second switching delays. In this embodiment, each of the M second switching delays indicates a delay for switching by the terminal device between two frequency band groups.

In this embodiment, the second switching delay may be an item in a second switching set. For example, values in the second switching set may be greater than 35 microseconds and less than or equal to 1 millisecond. For example, the second switching set may include {140 microseconds, 210 microseconds, and 280 microseconds}, the second switching set may include {140 microseconds, 210 microseconds, and 500 microseconds}, or the second switching set may include {140 microseconds, 280 microseconds, 400 microseconds, 500 microseconds, and 1 millisecond}. It should be understood that the values in the second switching set are merely used as examples. For example, the second switching set may alternatively include 0 microseconds, 35 microseconds, and the like. This is not limited.

In an example, it is assumed that the terminal device has two phase-locked loops. When the terminal device performs switching between the group #4 and the group #2, the following scenario is considered: It is assumed that a phase-locked loop #1 is locked to the frequency band #D, and a phase-locked loop #2 is locked to the frequency band #B. When the terminal device switches from the frequency band #D to the frequency band #A and the frequency band #C, the phase-locked loops may use a serial switching manner. For example, the phase-locked loop #1 may be first re-locked to the frequency band #A, and then the phase-locked loop #2 may be re-locked to the frequency band #D. A serial switching delay of the phase-locked loops is 280 microseconds. In other words, in this application, based on the foregoing scenario, it is further proposed that switching between frequency band groups needs 280 microseconds. In this way, a delay for switching by the terminal device between the two frequency band groups can be fully taken into account, to facilitate resource scheduling by the network device. This enables the terminal device to complete switching more effectively, thereby ensuring data transmission performance. It should be understood that the serial switching delay of the phase-locked loops may be alternatively another value, for example, 300 microseconds, 350 microseconds, or 400 microseconds. This is not limited herein.

In another example, it is assumed that the terminal device has two phase-locked loops. When the terminal device performs switching between the group #4 and the group #2, the following scenario is considered: It is assumed that a phase-locked loop #1 is locked to the frequency band #D, and a phase-locked loop #2 is locked to the frequency band #B. When the terminal device switches from the frequency band #D to the frequency band #A and the frequency band #C, the phase-locked loops may use a partial serial switching manner. For example, the phase-locked loop #1 is first re-locked to the frequency band #A, and after approximately 70 microseconds, the phase-locked loop #2 is re-locked to the frequency band #D. A partial serial switching delay of the phase-locked loops is 210 microseconds. It should be understood that the partial serial switching delay of the phase-locked loops may be alternatively another value, for example, 230 microseconds, 245 microseconds, or 250 microseconds. This is not limited herein.

In still another example, it is assumed that the terminal device has two phase-locked loops. When the terminal device performs switching between the group #4 and the group #2, the following scenario is considered: It is assumed that a phase-locked loop #1 is locked to the frequency band #D, and a phase-locked loop #2 is locked to the frequency band #B. When the terminal device switches from the frequency band #D to the frequency band #A and the frequency band #C, the phase-locked loops may use a parallel switching manner. For example, the phase-locked loop #2 may be re-locked to the frequency band #D while the phase-locked loop #1 is re-locked to the frequency band #A. A parallel switching delay of the phase-locked loops is 140 microseconds. It should be understood that the parallel switching delay of the phase-locked loops may be alternatively another value, for example, 200 microseconds, 150 microseconds, or 180 microseconds. This is not limited herein.

Further, when determining the second switching delays, the terminal device may further consider a quantity of radio frequency chains supported in each frequency band. For example, the frequency band #A supports two radio frequency chains, the frequency band #B supports two radio frequency chains, and the frequency band #C supports transmission by two radio frequency chains. Alternatively, the frequency band #A supports two radio frequency chains, the frequency band #B supports one radio frequency chain, and the frequency band #C supports transmission by two radio frequency chains. Alternatively, the frequency band #A supports one radio frequency chain, the frequency band #B supports one radio frequency chain, the frequency band #C supports transmission by two radio frequency chains, and the frequency band #D supports two radio frequency chains. For example, details are listed in Table 2.

**Table 2**

| Second switching delay (microsecond) | Frequency band group identifier | Frequency band group |
|---|---|---|
| 140 | Group #4 and group #1 | {Frequency band #D (2 Tx)} and {frequency band #A (1 Tx) and frequency band #B (1 Tx)} |
| 140 | Group #4 and group #5 | {Frequency band #D (2 Tx)} and {frequency band #A (2 Tx)} |
| 210 | Group #5 and group #2 | {Frequency band #A (2 Tx)} and {frequency band #A (1 Tx) and frequency band #C (1 Tx)} |
| 280 | Group #5 and group #1 | {Frequency band #A (2 Tx)} and {frequency band #A (1 Tx) and frequency band #D (1 Tx)} |
| 140 | Group #1 and group #2 | {Frequency band #A (1 Tx) and frequency band #B (1 Tx)} and {frequency band #A (1 Tx) and frequency band #C (1 Tx)} |
| 140 | Group #1, group #4, and group #5 | {Frequency band #A (1 Tx) and frequency band #B (1 Tx)}, {frequency band #A (2 Tx)}, and {frequency band #A (2 Tx)} |

For example, the terminal device determines that a second switching delay for switching between the group #4 and the group #1 (which may be switching from the group #4 to the group #1, or may be switching from the group #1 to the group #4) is 140 microseconds. For example, parallel switching of the phase-locked loops may be performed in this case.

For another example, the terminal device determines that a second switching delay for switching between the group #4 and the group #5 (which may be switching from the group #4 to the group #5, or may be switching from the group #5 to the group #4) is 140 microseconds. For example, parallel switching of the phase-locked loops may also be performed in this case.

For still another example, the terminal device determines that a second switching delay for switching between the group #5 and the group #2 (which may be switching from the group #5 to the group #2, or may be switching from the group #2 to the group #5) is 210 microseconds. For example, partial serial switching of the phase-locked loops may be performed in this case.

For yet another example, the terminal device determines that a second switching delay for switching between the group #5 and the group #1 (which may be switching from the group #5 to the group #1, or may be switching from the group #1 to the group #5) is 280 microseconds. For example, serial switching of the phase-locked loops may be performed in this case.

In this embodiment, the frequency band groups are distinguished from each other and the network device configures the frequency band group identifiers. In this way, the terminal device can report the second switching delays corresponding to the frequency band group identifiers (which can also be understood as reporting the second switching delays by using a frequency band group as a granularity). In comparison with an existing manner in which the terminal device reports switching delays by using each frequency band as a granularity, signaling overheads can be greatly reduced in this embodiment.

Step 403: The terminal device sends third information to the network device, where the third information includes at least the j^{th} second switching delay.

In this embodiment, the third information may be, for example, capability information of the terminal device.

In a possible implementation, the third information may include a plurality of second switching delays, for example, a k^{th} second switching delay, a p^{th} second switching delay, and the like. Each second switching delay is corresponding to a delay for switching between two frequency band groups.

In another possible implementation, the third information includes the frequency band group identifiers and the second switching delays corresponding to the frequency band group identifiers. For example, the third information includes {group #1 and group #4, and second switching delay being 140 microseconds}, {group #4 and group #5, and second switching delay being 140 microseconds}, {group #5 and group #1, and second switching delay being 280 microseconds}, and the like.

In still another possible implementation, the third information may further include quantities of transmit radio frequency chains supported in frequency bands in the frequency band groups, for example, data of radio frequency chains supported in the frequency band #A and a quantity of radio frequency chains supported in the frequency band #B in the group #1 {frequency band #A and frequency band #B}. For example, the frequency band #A supports one radio frequency chain, and the frequency band #B supports one radio frequency chain. For another example, the frequency band #A in the group #5 {frequency band #A} supports two radio frequency chains.

In a possible implementation, the third information may further include K2' that can be accepted by the terminal device (for example, K2' is greater than or equal to duration of three slots or duration of four slots). For example, K2' may be the existing K2 plus a lock time of a phase-locked loop. In an example, a table may be separately defined for K2', where values of K2' are different from values listed in an existing K2 table. When the network device indicates K2' to the terminal device, a table index indication and a K2' value indication are needed. In another example, values of K2' may be additionally added based on an existing K2 table. For example, a bit may be extended. In this case, a table index indication is not needed. Optionally, the network device may determine scheduling of uplink data for the terminal device based on K2' reported by the terminal device. In another possible implementation, the terminal device may alternatively report an expected minimum value of K1 and K2, so that the network device can determine appropriate values of K1 and K2 for the terminal device.

In a possible implementation, the third information may further include a switching delay needed for switching by the terminal device from a default state or a fallback state to a new frequency band. In this case, after the terminal device completes transmission in a current frequency band, the current frequency band may be further fallen back to a frequency band corresponding to the default state/fallback state to perform data transmission. For example, the switching delay may be 140 microseconds, 210 microseconds, or 280 microseconds. For another example, the switching delay may be alternatively 400 microseconds, 500 microseconds, 1 millisecond, or the like.

Step 404: The network device receives the third information, and determines scheduling of the uplink data based on the third information.

For example, the terminal device may determine K2 and/or K1 based on the third information. For descriptions of K1 and K2, refer to the descriptions of step 304 in the method 300. Details are not described herein again.

In an example, the network device receives the second switching delays, and determines scheduling of the uplink data based on the third information. For example, the network device may determine, based on the second switching delays corresponding to the frequency band group identifiers, a slot resource to be scheduled, and use the resource for data transmission in a switched frequency band group. Specifically, assuming that the third information received by the network device includes {group #1 and group #4, and second switching delay being 140 microseconds}, the network device may determine a resource for sending the uplink data by the terminal device.

For example, the network device determines that a slot in which the group #1 is scheduled to transmit data and a slot in which the group #2 is scheduled to transmit data are separated by four symbols.

Step 405: The network device sends fourth information to the terminal device, where fifth information indicates target frequency band group identifiers.

For example, the network device may indicate the target frequency band group identifiers by using DCI. In this application, the target frequency band group identifier may be at least two of the X frequency band group identifiers. For example, the network device configures the X frequency band group identifiers for the terminal device, where target frequency band group identifiers may be the group #1 and the group #4 of the X frequency band group identifiers.

Step 406: The terminal device receives the fourth information, and performs, based on an indication of the fourth information, frequency band switching in target frequency band groups corresponding to the target frequency band group identifiers.

In an example, it is assumed that the target frequency band group identifiers indicated by the fourth information are the group #1, the group #4, and the group #5. In this case, the terminal device may perform frequency band switching between the three frequency band groups. It is assumed that the terminal device performs switching between the group #1 and the group #4. For example, the terminal device currently transmits data in a slot #1 (slot #1) by using a frequency band included in the group #1. It is assumed that a switching time that is reported by the terminal device and that is needed for switching between the group #1 and the group #4 is 140 microseconds (as described above, parallel switching of the phase-locked loops may be performed). In this case, the network device may perform scheduling for the terminal device to transmit data starting from a 5^{th} symbol or a 6^{th} symbol in a slot #2 by using the group #4.

In another example, when the terminal device cannot switch between frequency band groups in time in a slot scheduled by the network device (the network device performs scheduling for the terminal device to transmit data starting from a 2^{nd} symbol in a slot #2 by using the group #4), the terminal device may perform puncturing (puncture) on the uplink data. In this case, the network device may perform detection based on a quantity of originally scheduled uplink symbols, or may perform detection based on a quantity of symbols that may be reduced. For the latter case, a mask (mask) may be added to an uplink demodulation reference signal (UL DMRS), and a quantity of currently reduced symbols is indicated by using the mask, so that the network device can perform corresponding detection based on the quantity of reduced symbols. For example, the network device schedules thirteen symbols for uplink transmission. When a switching delay of the terminal device further needs to occupy three more symbols, that is, when the terminal device finds that one symbol is insufficient to be occupied by a delay for switching between frequency band groups, the terminal device punctures more symbols.

Optionally, encoding may be performed for uplink transmission of the terminal device based on 10 symbols. Optionally, the network device may detect that energy of first four symbols is 0, and perform decoding preferentially based on the 10 symbols, or may perform decoding many times based on even 11 symbols, 12 symbols, or 13 symbols. For example, the network device may perform detection directly based on 13 symbols, and precision is lost to some extent. However, this does not greatly affect performance for an MCS (for example, non-256 QAM).

Step 407: The terminal device sends the uplink data by using the target frequency band group.

For example, the terminal device may send, by using a frequency band in the target frequency band group, the uplink data on the resource scheduled by the network device.

Based on the method provided in this embodiment, the terminal device may report the second switching delays for switching between the frequency band groups, where a second switching delay is a delay for switching by the terminal device between the first frequency band group and the second frequency band group. In other words, the terminal device reports the delays for switching between the frequency band groups, and the network device may determine a K2 delay, so that the terminal device can effectively perform frequency band switching between the frequency band groups. In this way, the terminal device flexibly and effectively completes switching between a plurality of frequency bands, thereby ensuring data transmission performance.

This application further provides a communication method 500. The method 500 illustrates steps of still another specific embodiment in the technical solutions of this application from a perspective of interaction between a terminal device and a network device. A procedure for the method 500 is similar to the procedure for the method 300. For details, refer to the procedure in FIG. 3 for understanding. Details are not described again.

In this application, the network device may preconfigure frequency band groups. For example, the network device may perform preconfiguration as follows: A frequency band group #1 includes {frequency band #A and frequency band #B}, a frequency band group #2 may include {frequency band #A and frequency band #C}, a frequency band group #3 may include {frequency band #B}, a frequency band group #4 may include {frequency band #D}, a frequency band group #5 may include {frequency band #A}, and so on.

It should be noted that a frequency band group in the method 500 may include at least one frequency band. In other words, in the method 500, there may be a case in which there is only one frequency band in a frequency band group.

Step 501: The network device sends frequency band group switching identification information to the terminal device, where the frequency band group switching identification information includes an identifier of switching by the terminal device between a first frequency band group and a second frequency band group.

In a possible implementation, in this application, frequency band group switching identifiers may be predefined in a protocol or preconfigured.

For example, the network device may send RRC signaling to the terminal device, where the RRC signaling includes Y frequency band group identifiers.

For example, a frequency band group switching identifier #1 (for example, an index #1) identifies switching by the terminal device between a group #1 {frequency band #A and frequency band #B} and a group #2 {frequency band #A and frequency band #C}.

For example, a frequency band group switching identifier #2 (for example, an index #2) identifies switching by the terminal device between a group #5 {frequency band #A} and the group #2 {frequency band #A and frequency band #C}.

For example, a frequency band group switching identifier #3 (for example, an index #3) identifies switching by the terminal device between the group #5 {frequency band #A} and the group #1 {frequency band #A and frequency band #B}.

For example, a frequency band group switching identifier #4 (for example, an index #4) identifies switching by the terminal device between the group #5 {frequency band #A} and a group #4 {frequency band #D}.

For example, a frequency band group switching identifier #5 (for example, an index #5) identifies switching by the terminal device between the group #5 {frequency band #A} and a group #3 {frequency band #B}.

Step 502: The terminal device receives the frequency band group switching identification information from the network device, and determines M (M is a positive integer) second switching delays.

In this embodiment, the second switching delay may be an item in a third switching set. For example, values in the third switching set may be greater than or equal to 0 microseconds and less than or equal to 1 millisecond. For example, the third switching set may include {0 microseconds, 35 microseconds, 140 microseconds, 210 microseconds, and 280 microseconds}, the third switching set may include {0 microseconds, 140 microseconds, 210 microseconds, and 500 microseconds}, or the third switching set may include {35 microseconds, 280 microseconds, 400 microseconds, 500 microseconds, and 1 millisecond}. Specifically, for meanings of the values in the third switching set, refer to the descriptions in the method 200 and the method 400 for understanding. Details are not described herein again.

In this embodiment, the second switching delays may be corresponding to the frequency band group switching identifiers, for example, {index #1 and 140 microseconds}, {index #2 and 210 microseconds}, {index #3 and 280 microseconds}, {index #4 and 0 microseconds}, and {index #5 and 35 microseconds}.

Further, in this embodiment, when determining the second switching delays, the terminal device may further consider a quantity of radio frequency chains supported in each frequency band. For example, the frequency band #A supports two radio frequency chains, the frequency band #B supports two radio frequency chains, and the frequency band #C supports transmission by two radio frequency chains. Alternatively, the frequency band #A supports two radio frequency chains, the frequency band #B supports one radio frequency chain, and the frequency band #C supports transmission by two radio frequency chains. Alternatively, the frequency band #A supports one radio frequency chain, the frequency band #B supports one radio frequency chain, the frequency band #C supports transmission by two radio frequency chains, the frequency band #D supports two radio frequency chains, and so on. For example, details are listed in Table 3.

**Table 3**

| Second switching delay (microsecond) | Frequency band group switching identifier | Frequency band group |
|---|---|---|
| 140 | Index #1 (group #1 and group #2) | {Frequency band #A (1 Tx) and frequency band #B (1 Tx)} and {frequency band #A (1 Tx) and frequency band #C (1 Tx)} |
| 210 | Index #2 (group #5 and group #2) | {Frequency band #A (2 Tx)} and {frequency band #A (1 Tx) and frequency band #C (1 Tx)} |
| 280 | Index #3 (group #5 and group #1) | {Frequency band #A (2 Tx)} and {frequency band #A (1 Tx) and frequency band #D (1 Tx)} |
| 0 | Index #4 (group #5 and group #4) | {Frequency band #A (2 Tx)} and {frequency band #D (2 Tx)} |
| 35 | Index #5 (group #5 and group #3) | {Frequency band #A (2 Tx)} and {frequency band #B (2 Tx)} |

In this embodiment, the frequency band groups are distinguished from each other and the network device configures the frequency band group switching identifiers. In this way, the terminal device can report the second switching delays corresponding to the frequency band group switching identifiers (for example, indexes) (which can also be understood as reporting the second switching delays by using frequency band group switching as a granularity). In comparison with a manner in which a second switching delay corresponding to at least two frequency band group identifiers needs to be reported in the method 400, signaling overheads can be further reduced in this embodiment.

Step 503: The terminal device sends third information to the network device, where the third information includes at least a j^{th} second switching delay.

In this embodiment, the third information may be, for example, capability information of the terminal device.

In a possible implementation, the third information may include a plurality of second switching delays, for example, a k^{th} second switching delay, a p^{th} second switching delay, and the like. Each second switching delay is corresponding to one frequency band group switching identifier.

In another possible implementation, the third information includes the frequency band group switching identifiers and the second switching delays corresponding to the frequency band group identifiers. For example, the third information includes {index #1 and second switching delay being 140 microseconds}, {index #2 and second switching delay being 210 microseconds}, {index #3 and second switching delay being 280 microseconds}, and the like.

In still another possible implementation, the third information may further include quantities of transmit radio frequency chains supported in frequency bands in the frequency band groups, for example, data of radio frequency chains supported in the frequency band #A and a quantity of radio frequency chains supported in the frequency band #B in the group #1 {frequency band #A and frequency band #B}. For example, the frequency band #A supports one radio frequency chain, and the frequency band #B supports one radio frequency chain. For another example, the frequency band #A in the group #5 {frequency band #A} supports two radio frequency chains.

In a possible implementation, the third information may further include K2' that can be accepted by the terminal device. For details, refer to corresponding descriptions of step 403 in the method 400. Details are not described herein again.

In a possible implementation, the third information may further include a switching delay needed for switching by the terminal device from a default state or a fallback state to a new frequency band. For details, refer to corresponding descriptions of step 403 in the method 400. Details are not described herein again.

Step 504: The network device receives the third information, and determines scheduling of uplink data based on the third information.

For example, the terminal device may determine K2 and/or K1 based on the third information. For descriptions of K1 and K2, refer to the descriptions of step 304 in the method 300. Details are not described herein again.

In an example, the network device receives the second switching delays, and determines scheduling of the uplink data based on the third information. For example, the network device may determine, based on the second switching delays corresponding to the frequency band group switching identifiers, a slot resource to be scheduled, and use the resource for data transmission in a switched frequency band group. Specifically, assuming that the third information received by the network device includes {index #1 and second switching delay being 140 microseconds}, the network device may determine a resource for sending the uplink data by the terminal device.

For example, the network device determines that a slot in which the group #1 is scheduled to transmit data and a slot in which the group #2 is scheduled to transmit data are separated by four symbols.

Step 505: The network device sends fifth information to the terminal device, where the fifth information indicates a target frequency band group switching identifier.

For example, the network device may indicate the target frequency band group switching identifier by using DCI. In this application, the target frequency band group switching identifier may be one or more of the Y frequency band group switching identifiers. For example, the network device configures the Y frequency band group switching identifiers for the terminal device, where target frequency band group switching identifiers may be the index #1 and the index #3 of the Y frequency band group switching identifiers.

Step 506: The terminal device receives the fifth information, and performs, based on an indication of the fifth information, frequency band switching between target frequency band groups corresponding to the target frequency band group switching identifier.

In an example, it is assumed that the target frequency band group identifier indicated by the fifth information is the index #1. In this case, the terminal device may determine to perform switching between the group #1 and the group #2. For example, the terminal device currently transmits data in a slot #1 (slot #1) by using a frequency band included in the group #1. It is assumed that a switching time that is reported by the terminal device and that is needed for switching between the group #1 and the group #2 is 140 microseconds (as described above, parallel switching of the phase-locked loops may be performed). In this case, the network device may perform scheduling for the terminal device to transmit data starting from a 5^{th} symbol or a 6^{th} symbol in a slot #2 by using the group #4.

In another example, when the terminal device cannot switch between frequency band groups in time in a slot scheduled by the network device, a puncturing manner may be used. For details, refer to step 406 in the method 400 for understanding. Details are not described herein again.

Step 507: The terminal device sends the uplink data by using the target frequency band group identified by the target frequency band group switching identifier.

For example, the terminal device may send, by using a frequency band in the target frequency band group, the uplink data on the resource scheduled by the network device.

Based on the method provided in this embodiment, the terminal device may report the second switching delays corresponding to the frequency band group switching identifiers, where a second switching delay is a delay for switching by the terminal device between two frequency band groups. In other words, the terminal device reports the delays for switching between the frequency band groups, and the network device may determine a K2 delay, so that the terminal device can effectively perform frequency band switching between the frequency band groups. In this way, the terminal device flexibly and effectively completes switching between a plurality of frequency bands, thereby ensuring data transmission performance and reducing signaling overheads.

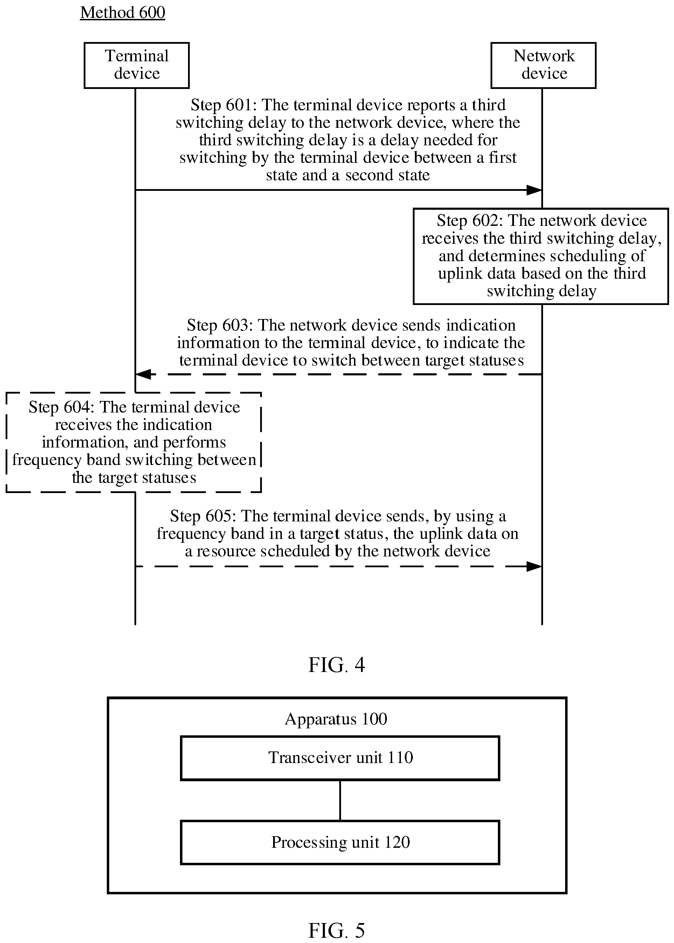

As shown in FIG. 4, this application further provides a communication method 600. The method includes the following steps.

Step 601: A terminal device reports a third switching delay to a network device.

In this embodiment, the third switching delay can be understood as a delay needed for switching by the terminal device between a first state and a second state.

In an example, the terminal device may report, to the network device, a quantity of transmit radio frequency chains supported in a frequency band in a third frequency band group (which can also be understood as the first state) (the third frequency band group includes at least one frequency band). For example, the third frequency band group includes a frequency band #A and a frequency band #B, where the frequency band #A supports one transmit radio frequency chain, and the frequency band #B supports one transmit radio frequency chain. For another example, the third frequency band group includes a frequency band #A, where the frequency band #A supports two transmit radio frequency chains. The terminal device may also report, to the network device, a quantity of transmit radio frequency chains supported in a frequency band in a fourth frequency band group (which can also be understood as the second state) (the fourth frequency band group includes at least one frequency band). For example, the fourth frequency band group includes a frequency band #C and a frequency band #D, where the frequency band #C supports one transmit radio frequency chain, and the frequency band #D supports transmission by one transmit radio frequency chain. For another example, the fourth frequency band group includes a frequency band #B and a frequency band #C, where the frequency band #B supports one transmit radio frequency chain, and the frequency band #C supports transmission by one transmit radio frequency chain. The terminal device may also report, to the network device, the third switching delay that is needed for switching by the terminal device from the third frequency band group to the fourth frequency band group.

It should be understood that the terminal device may further report a third switching delay between a third state and a fourth state, a switching delay between the first state and the third state, or the like. This is not limited.

For example, the third delay may be 280 microseconds. For another example, the third delay is 0 microseconds, 35 microseconds, 140 microseconds, 210 microseconds, or 280 microseconds. For still another example, the third delay may be used by the network device to determine scheduling of uplink data.

In a possible implementation, the third switching delay is an item in a fourth switching set, and a value in the fourth switching set is greater than or equal to 0 and less than or equal to 1 millisecond. Alternatively, a value in the fourth switching set may be greater than or equal to duration of three slots or duration of four slots.

Step 602: The network device receives the third switching delay, and may determine scheduling of the uplink data for the terminal device based on the third switching delay.

For details, refer to the descriptions of step 304 in the method 300, step 404 in the method 400, and step 504 in the method 500. Details are not described herein again.

Step 603: The network device sends indication information to the terminal device, to indicate the terminal device to switch between target statuses.

For example, the target statuses may be a first state and a second state. For another example, the target statuses may be a third state, a fourth state, and the like.

Step 604: The terminal device receives the indication information, and performs frequency band switching between the target statuses.

For example, the terminal device may switch between the first state and the second state, or the terminal device switches between the first state and the third state.

Step 605: The terminal device sends, by using a frequency band in a target status, the uplink data on the resource scheduled by the network device.

Based on the foregoing technical solution, in this application, the terminal device may report the third switching delay for switching between the states. The third switching delay may be a typical value. The network device may determine scheduling of the uplink data for the terminal device based on the third switching delay, so that the terminal device can effectively perform frequency band switching between the states, that is, the terminal device can flexibly and effectively switch between a plurality of frequency bands, thereby ensuring data transmission performance.

This application further provides a method 700. For an interaction procedure between a network device and a terminal device, refer to FIG. 4 in the method 600 for understanding. Details are not described again.

Step 701: The terminal device reports a fourth switching delay to the network device.

In this embodiment, the fourth switching delay may have two values, or any one of the two values. A first value may be, for example, used by the network device to determine an advance for scheduling data to the terminal device. For example, the first value is a switching time (switch time) in T_{proc} in the 3GPP standard. For another example, the advance may include a radio frequency tuning delay and a software timing advance (for example, before software stops sending instructions, the network device constructs new instructions and configures the new instructions for the terminal device to instruct the terminal device to enable a new phase-locked loop). A second value is an interruption delay for switching in a frequency band group, between frequency band groups, or between states. The first value (the first value may be greater than or equal to 280 microseconds, and the first value may be, for example, 280 microseconds, 300 microseconds, 430 microseconds, 500 microseconds, or 1 millisecond) is used for scheduling switching preparation, and belongs to a switching time or a radio frequency tuning time (tuning/retuning time) in a scheduling switching preparation time. The second value (the second value may be less than 280 microseconds, for example, 0 microseconds, 35 microseconds, 140 microseconds, or 200 microseconds) may be used as a gap for switching in a frequency band group, between frequency band groups, or between states, or used for interruption of switching in a frequency band group, between frequency band groups, or between states.

Step 702: The network device receives the fourth switching delay, and may determine scheduling of uplink data for the terminal device based on a third switching delay.

For example, the network device may determine, for the terminal device based on the first value, symbols or slots in which a scheduled resource for the uplink data is located.

For another example, the network device determines, based on the second value, delays needed for switching by the terminal device in a frequency band group, between frequency band groups, and between states, and determines a location of a time domain resource for the uplink data of the terminal device based on the delay.

Optionally, step 703 is further included: The network device sends indication information to the terminal device, to indicate the terminal device to switch between target frequency bands.

For example, the target frequency bands may be a frequency band #A and a frequency band #B. For another example, target statuses may be a frequency band #A, a frequency band #C, and the like.

Optionally, step 704 is further included: The terminal device receives the indication information, and performs frequency band switching between the target frequency bands.

For example, the terminal device may switch between the frequency band #A and the frequency band #B, or the terminal device switches between the frequency band #A and the frequency band #C.

Step 705: The terminal device sends, by using the target frequency bands, the uplink data on the resource scheduled by the network device.

In an example, for the second value, when the terminal device cannot complete frequency band switching in time in a slot scheduled by the network device, the terminal device performs puncturing (puncture) on the uplink data. In this case, the network device may perform detection based on a quantity of originally scheduled uplink symbols, or may perform detection based on a quantity of symbols that may be reduced. For the latter case, a mask (mask) may be added to an uplink demodulation reference signal (UL DMRS) or scrambling may be performed on the UL DMRS, and a quantity of currently reduced symbols is indicated by using the mask or scrambling information, so that the network device can perform corresponding detection based on the quantity of reduced symbols. For example, the network device schedules thirteen symbols for uplink transmission. When a switching delay of the terminal device further needs to occupy one more symbol, that is, when the terminal device finds that one symbol is insufficient to be occupied by a delay for switching in a frequency band group, the terminal device punctures more symbols.

Optionally, encoding may be performed for uplink transmission of the terminal device based on 10 symbols. Optionally, the network device may detect that energy of first four symbols is 0, and perform decoding preferentially based on the 10 symbols, or may perform decoding many times based on even 11 symbols, 12 symbols, or 13 symbols. For example, the network device may perform detection directly based on 13 symbols, and precision is lost to some extent. However, this does not greatly affect performance for an MCS (for example, non-256 QAM).

Based on the foregoing technical solution, in this application, the terminal device may report the fourth switching delay, where the fourth switching delay may include two values. The terminal device may encode a corresponding symbol based on the two values. If the terminal device cannot complete data transmission in the slot scheduled by the network device, the terminal device may further perform puncturing, and indicate the network device. This can reduce duration in which the network device performs decoding and ensure data transmission performance while ensuring that the terminal device completes frequency band switching.

Further, in this application, in four frequency bands, a quantity of combinations of frequency bands of the terminal device and quantities of transmit radio frequency chains supported in the frequency bands increases (for example, there are ten combinations) because of the following two factors: (1) An amount of on-chip storage is limited. The on-chip storage supports radio frequency channel parameters corresponding to a maximum of six combination states. Each of the four frequency bands (four carriers) supports two radio frequency chains, and there may be ten combinations. This leads to dynamic switching between off-chip and on-chip, and generates a switching time of radio frequency parameters. Therefore, a quantity of states of the parallel combinations supported in the four frequency bands needs to be reduced. (2) Some 1 T_{X}+1 Tx combinations (for example, the frequency band #A supports one transmit radio frequency chain, and the frequency band #B supports one transmit radio frequency chain) may have an intra-modulation (intra-modulation, IMD) interference problem, which increases design difficulty of a product. The terminal device may report state combinations supported in the ten state combinations. For example, the terminal may report, to the network device by using a user capability, parallel combinations of 2 T_{X}, 1 T_{X}, and 1 T_{X}⁺1 Tx that are specifically supported by the frequency bands. In this application, it is proposed that there are no more than six states of the combinations reported by the terminal device. This ensures that on-chip storage can be implemented, and reduces a time needed for dynamic switching.

In this application, in a possible implementation, regardless of subcarrier spacings (subcarrier spacings, SCSs), it may be specified that a delay for switching in a frequency band group, a delay for switching between frequency band groups, or a delay for switching between states is greater than 1 millisecond.

In this application, the method 200, the method 300, the method 400, and the method 500 may also be combined. For example, the terminal device may report the delays for switching in the frequency band groups and the delays for switching between the frequency band groups to the network device together. For another example, the network device may send the frequency band group identifiers, the frequency band group switching identifiers, and the like to the terminal device together. In other words, the technical solution of switching in a frequency band group and the technical solution of switching between frequency band groups may be combined with each other.

It can be understood that the examples in the method 200 to the method 700 in embodiments of this application are merely intended to help a person skilled in the art understand embodiments of this application, but are not intended to limit embodiments of this application to specific scenarios in the examples. It is clear that a person skilled in the art can make various equivalent modifications or variations to the examples in the method 200 to the method 700, and such modifications or variations also fall within the scope of embodiments of this application.

It can also be understood that some optional features in embodiments of this application may be independent of other features in some scenarios, or may be combined with other features in some scenarios. This is not limited.

It can also be understood that embodiments described in this application may be independent solutions, or may be combined based on internal logic. All these solutions fall within the protection scope of this application. In addition, interpretations or descriptions of terms in embodiments may be mutually referenced or interpreted in embodiments. This is not limited.

It can also be understood that various numeric sequence numbers in embodiments of this application do not mean execution sequences, but are merely for differentiation for ease of description, and therefore should not constitute any limitation on an implementation process of embodiments of this application. For example, in the method 300, step 301 and step 305 may be performed at the same time, that is, the network device also delivers the target frequency band group identifier when sending the frequency band group identifiers to the terminal device.

It should be understood that "predefine" in this application can be understood as "define", "predefine", "store", "prestore", "pre-negotiate", "preconfigure", "build into", or "pre-burn".

It can be understood that in this application, "when", "if", and "in case of" all mean that an apparatus performs corresponding processing in an objective situation, are not intended to limit time, do not require that the apparatus should have a determining action during implementation, and do not mean that there are other limitations.

It can be understood that in this specification, a term "and/or" describes only an association relationship for describing associated objects, and indicates that three relationships may exist. For example, A and/or B may indicate the following three cases: Only A exists, both A and B exist, and only B exists. In addition, a character "/" in this specification generally indicates an "or" relationship between associated objects.

The foregoing mainly describes the solutions provided in embodiments of this application from a perspective of interaction between nodes. It can be understood that, to implement the foregoing functions, the nodes such as the terminal device and the network device include corresponding hardware structures and/or software modules for performing the functions. A person skill in the art should be aware that, in combination with units and algorithm steps in the examples described in embodiments disclosed in this specification, this application can be implemented by hardware or a combination of hardware and computer software. Whether a function is performed by using hardware or by computer software driving hardware depends on particular applications and design constraints of the technical solutions. A person skilled in the art may use a different method to implement the described functions for each particular application, but it should not be considered that the implementation goes beyond the scope of this application.

In embodiments of this application, functional modules of the terminal device and the network device may be obtained through division based on the foregoing method examples. For example, functional modules may be obtained through division in correspondence to functions, or two or more functions may be integrated into one processing module. The integrated module may be implemented in a form of hardware, or may be implemented in a form of a software functional module. It should be noted that division into modules in embodiments of this application is an example, is merely logical function division, and may be other division during actual implementation. The following uses examples for description in which functional modules are obtained through division in correspondence to functions.

FIG. 5 is a block diagram of a communication apparatus 100 according to an embodiment of this application. As shown in the figure, the apparatus 100 may include a transceiver unit 110 and a processing unit 120.

In a possible design, the apparatus 100 may be the terminal device in the foregoing method embodiments, or may be a chip configured to implement functions of the terminal device in the foregoing method embodiments. It should be understood that the apparatus 100 may be corresponding to the terminal device in the method 200, the method 300, the method 400, the method 500, the method 600, and the method 700 according to embodiments of this application. The apparatus 100 may perform the steps corresponding to the terminal device in the method 200, the method 300, the method 400, the method 500, the method 600, and the method 700 in embodiments of this application.

In a possible implementation, the processing unit is configured to determine first switching delays of N frequency band groups, and the transceiver unit is configured to send first information, where the first information includes the first switching delays of the N frequency band groups.

In a possible implementation, the transceiver unit is configured to receive frequency band group identification information, where the frequency band group identification information includes N frequency band group identifiers.

In a possible implementation, the transceiver unit is configured to receive second information, where the second information indicates a target frequency band group identifier; and the processing unit is configured to perform, based on the second information, frequency band switching in a target frequency band group corresponding to the target frequency band group identifier, where the target frequency band group identifier is one or more of the N frequency band group identifiers.

In a possible implementation, the processing unit is configured to determine M second switching delays, where a j^{th} second switching delay is a delay for switching by the terminal device between a first frequency band group and a second frequency band group, the j^{th} second switching delay is one of the M second switching delays, the first frequency band group and the second frequency band group each include at least one frequency band, and M is a positive integer; and the transceiver unit is configured to send third information, where the third information includes at least the jth second switching delay.

In a possible implementation, the transceiver unit is configured to receive frequency band group identification information, where the frequency band group identification information includes at least a first frequency band group identifier and a second frequency band group identifier.

In a possible implementation, the transceiver unit is configured to receive fourth information, where the fourth information indicates target frequency band group identifiers; and the processing unit is configured to perform, based on the fourth information, frequency band switching between target frequency band groups corresponding to the target frequency band group identifiers, where the target frequency band group identifiers are at least two of X frequency band group identifiers.

In a possible implementation, the transceiver unit is configured to receive frequency band group switching identification information, where the frequency band group switching identification information includes at least a j^{th} frequency band group switching identifier.

In a possible implementation, the transceiver unit is configured to receive fifth information from a network device, where the fifth information indicates a target frequency band group switching identifier; and the processing device is configured to perform, based on the fifth information, frequency band switching between target frequency band groups corresponding to the target frequency band group switching identifier, where the target frequency band group switching identifier is one or more of Y frequency band group switching identifiers.

In a possible design, the apparatus 100 may be the network device in the foregoing method embodiments, or may be a chip configured to implement functions of a terminal device in the foregoing method embodiments. It should be understood that the apparatus 100 may be corresponding to the network device in the method 200, the method 300, the method 400, the method 500, the method 600, and the method 700 according to embodiments of this application. The apparatus 100 may perform the steps corresponding to the network device in the method 200, the method 300, the method 400, the method 500, the method 600, and the method 700 in embodiments of this application.

In a possible implementation, the transceiver unit is configured to receive first information, where the first information includes first switching delays of N frequency band groups, the N frequency band groups include an i^{th} frequency band group, the first switching delays of the N frequency band groups include an i^{th} first switching delay, the i^{th} first switching delay is a delay for switching by the terminal device between at least two different frequency bands included in the i^{th} frequency band group, and N is a positive integer; and the processing unit is configured to determine scheduling of uplink data based on the first information.

In a possible implementation, the transceiver unit is configured to send frequency band group identification information, where the frequency band group identification information includes N frequency band group identifiers.

In a possible implementation, the transceiver unit is configured to send second information, where the second information indicates a target frequency band group identifier, the target frequency band group identifier indicates the terminal device to perform frequency band switching in a target frequency band group corresponding to the target frequency band group identifier, and the target frequency band group identifier is one or more of the N frequency band group identifiers.

In a possible implementation, the transceiver unit is configured to receive third information, where the third information includes at least a j^{th} second switching delay, the j^{th} second switching delay is a delay for switching by a terminal device between a first frequency band group and a second frequency band group, the j^{th} second switching delay is one of M second switching delays, the first frequency band group and the second frequency band group each include at least one frequency band, and M is a positive integer; and the processing unit is configured to determine scheduling of uplink data based on the third information.

In a possible implementation, the transceiver unit is configured to send frequency band group identification information, where the frequency band group identification information includes at least a first frequency band group identifier and a second frequency band group identifier.

In a possible implementation, the transceiver unit is configured to send fourth information, where the fourth information indicates target frequency band group identifiers, the target frequency band group identifiers are used to perform frequency band switching between target frequency band groups corresponding to the target frequency band group identifiers, and the target frequency band group identifiers are at least two of X frequency band group identifiers.

In a possible implementation, the transceiver unit is configured to send frequency band group switching identification information, where the frequency band group switching identification information includes at least a j^{th} frequency band group switching identifier.

In a possible implementation, the transceiver unit is configured to send fifth information, where the fifth information indicates a target frequency band group switching identifier, the target frequency band group switching identifier indicates the terminal device to perform frequency band switching between target frequency band groups corresponding to the target frequency band group switching identifier, and the target frequency band group switching identifier is one or more of Y frequency band group switching identifiers.

It should also be understood that the apparatus 100 herein is embodied in a form of a functional unit. The term "unit" herein may be an application-specific integrated circuit (application-specific integrated circuit, ASIC), an electronic circuit, a processor configured to execute one or more software or firmware programs (for example, a shared processor, a dedicated processor, or a packet processor), a memory, a combined logic circuit, and/or another appropriate component supporting the described functions. In an optional example, a person skilled in the art can understand that the apparatus 100 may be specifically the terminal device or the network device in the foregoing embodiments, and may be configured to perform procedures and/or steps corresponding to the terminal device in the foregoing method embodiments. To avoid repetition, details are not described herein again.

The apparatus 100 in each of the foregoing solutions has functions of implementing corresponding steps performed by the terminal device or the network device in the foregoing methods. The functions may be implemented by using hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and other units such as the processing unit may be replaced by a processor, to respectively perform sending and receiving operations and related processing operations in the method embodiments.

In addition, the transceiver unit 110 may be alternatively a transceiver circuit (which may include, for example, a receiving circuit and a sending circuit), and the processing unit may be a processing circuit.

It should be noted that the apparatus in FIG. 5 may be the terminal device or the network device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

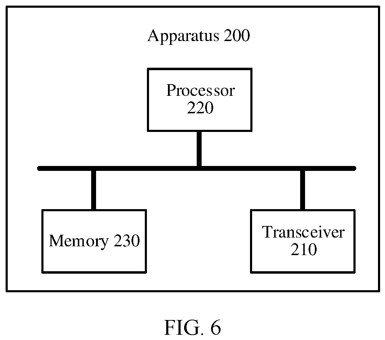

FIG. 6 is a block diagram of a communication apparatus 200 according to an embodiment of this application. As shown in the figure, the apparatus 200 includes at least one processor 220. The processor 220 is coupled to a memory, and is configured to execute instructions stored in the memory, to send a signal and/or receive a signal. Optionally, the device 200 further includes the memory 230, configured to store the instructions. Optionally, the device 200 further includes a transceiver 210, and the processor 220 controls the transceiver 210 to send the signal and/or receive the signal.

It should be understood that the processor 220 and the memory 230 may be integrated into a processing device, and the processor 220 is configured to execute program code stored in the memory 230, to implement the foregoing functions. During specific implementation, the memory 230 may be alternatively integrated into the processor 220, or may be independent of the processor 220.

It should also be understood that the transceiver 210 may include a transceiver (or referred to as a receiver) and a transmitter (or referred to as a sender). The transceiver may further include an antenna. There may be one or more antennas. The transceiver 210 may be a communication interface or an interface circuit.

Specifically, the transceiver 210 in the device 200 may be corresponding to the transceiver unit 110 in the device 100, and the processor 220 in the device 200 may be corresponding to the processing unit 120 in the device 200.

In a solution, the apparatus 200 is configured to implement operations performed by the terminal device in the foregoing method embodiments.

For example, the processor 220 is configured to execute a computer program or instructions stored in the memory 230, to implement related operations performed by the radio access network device in the foregoing method embodiments, for example, the method performed by the terminal device in any one of the embodiments in the method 200 to the method 600.

In another solution, the apparatus 200 is configured to implement operations performed by the network device in the foregoing method embodiments.

For example, the processor 220 is configured to execute a computer program or instructions stored in the memory 230, to implement related operations performed by the network device in the foregoing method embodiments, for example, the method performed by the network device in any one of the embodiments in the method 200 to the method 700.

It should be understood that a specific process in which the transceiver and the processor perform the corresponding steps is detailed in the foregoing method embodiments. For brevity, details are not described herein again.

In an implementation process, steps in the foregoing methods may be implemented by using an integrated logic circuit of hardware in the processor, or by using instructions in a form of software. The steps of the methods disclosed with reference to embodiments of this application may be directly implemented by using a hardware processor, or may be implemented by using a combination of the hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information from the memory and completes the steps in the foregoing methods in combination with the hardware in the processor. To avoid repetition, details are not described herein again.

It should be noted that the processor in embodiments of this application may be an integrated circuit chip, and has a signal processing capability. In an implementation process, steps in the foregoing method embodiments may be implemented by using an integrated logic circuit of hardware in the processor, or by using instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA), another programmable logic device, a discrete gate, a transistor logic device, or a discrete hardware component. The processor can implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly implemented by using a hardware decoding processor, or may be implemented by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information from the memory and completes the steps in the foregoing methods in combination with the hardware in the processor.

It can be understood that the memory in embodiments of this application may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example rather than limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the systems and the methods that are described in this specification is intended to include but is not limited to these memories and any other appropriate types of memories.

Based on the methods provided in embodiments of this application, this application further provides a computer program product. The computer program product stores computer program code. When the computer program code is run on a computer, the computer is enabled to perform the method performed by the terminal device or the network device in any one of the embodiments in the method 200 to the method 700.

Based on the methods provided in embodiments of this application, this application further provides a computer-readable medium. The computer-readable medium stores program code. When the program code is run on a computer, the computer is enabled to perform the methods performed by the terminal device or the network device in the foregoing embodiments.

Based on the methods provided in embodiments of this application, this application further provides a communication system. The communication system includes a terminal device and a network device. The terminal device is configured to perform steps corresponding to the terminal device in the foregoing methods 200 to 700, and the network device is configured to perform steps corresponding to the network device in the foregoing methods 200 to 700.

For descriptions of related content and beneficial effects of any apparatus provided above, refer to the corresponding method embodiments provided above. Details are not described herein again.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer instructions are loaded and executed on a computer, the procedures or functions according to embodiments of this application are completely or partially generated. The computer may be a general-purpose computer, a dedicated computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

In the foregoing apparatus embodiments, corresponding modules or units perform corresponding steps. For example, the transceiver unit (transceiver) performs a receiving or sending step in the method embodiments, and the processing unit (processor) may perform steps other than the sending and receiving steps. For specific functions of the units, refer to the corresponding method embodiments. There may be one or more processors.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, a thread of execution, a program, and/or a computer. As shown in figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may perform communication by using a local and/or remote process and based on a signal having one or more data packets (for example, data from two components interacting with another component in a local system, a distributed system, and/or across a network such as an internet interacting with other systems by using the signal).

A person of ordinary skill in the art can be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It can be clearly understood by a person skilled in the art that, for ease and brevity of description, for detailed working processes of the foregoing systems, devices, and units, refer to the corresponding processes in the foregoing method embodiments. Details are not described herein again.

In the several embodiments provided in this application, it should be understood that the disclosed systems, devices, and methods may be implemented in other manners. For example, the described device embodiments are merely examples. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the devices or units may be implemented in an electrical form, a mechanical from, or another form.

The units described as separate parts may or may not be physically separate, and parts displayed as units may or may not be physical units. To be specific, the parts may be located in one position or may be distributed on a plurality of network units. Some or all of the units may be selected depending on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, like a USB flash drive, a removable hard disk, a read-only memory (read-only memory, ROM), a random access memory (random access memory, RAM), a magnetic disk, or an optical disc.

It should be understood that "an embodiment" mentioned throughout this specification indicates that particular features, structures, or characteristics related to this embodiment are included in at least one embodiment of this application. Therefore, embodiments in the entire specification are unnecessarily a same embodiment. Moreover, these particular features, structure, or characteristics may be combined in one or more embodiments in any appropriate manner.

It should also be understood that ordinal numbers such as "first" and "second" mentioned in embodiments of this application are used to distinguish between a plurality of objects, and are not intended to limit sizes, content, a sequence, a time sequence, priorities, importance, or the like of the plurality of objects. For example, a first PDSCH and a second PDSCH may be a same physical channel, or may be different physical channels. In addition, these names do not indicate that the two physical channels have different information amounts, content, priorities, importance, or the like.

It should also be understood that in this application, "at least one" means one or more, and "a plurality of" means two or more. "At least an item (piece)" or a similar expression thereof means one or more items (pieces), that is, any combination of these items, including a singular item (piece) or any combination of plural items (pieces). For example, at least an item (piece) of a, b, or c represents a, b, c, a-b, a-c, b-c, or a-b-c.

It should also be understood that in embodiments of this application, "B corresponding to A" indicates that B is associated with A, and B may be determined based on A. However, it should also be understood that determining B based on A does not mean that B is determined based only on A. B may be alternatively determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a terminal device, first switching delays of N frequency band groups, wherein the N frequency band groups comprise an i^{th} frequency band group, the first switching delays of the N frequency band groups comprise an i^{th} first switching delay, the i^{th} first switching delay is a delay for switching by the terminal device between at least two different frequency bands comprised in the i^{th} frequency band group, and N is a positive integer; and
sending, by the terminal device, first information to a network device, wherein the first information comprises the first switching delays of the N frequency band groups.

2. The method according to claim 1, wherein the first information further comprises an i^{th} frequency band group identifier, the i^{th} frequency band group identifier is any one of N frequency band group identifiers, and the N frequency band group identifiers are in one-to-one correspondence with the switching delays of the N frequency band groups.

3. The method according to claim 2, wherein the method further comprises:
receiving, by the terminal device, frequency band group identification information from the network device, wherein the frequency band group identification information comprises the N frequency band group identifiers.

4. The method according to any one of claims 1 to 3, wherein the first information further comprises quantities of transmit radio frequency chains supported by the terminal device in the at least two different frequency bands, and the first information is used by the network device to determine scheduling of uplink data.

5. The method according to any one of claims 1 to 4, wherein the first switching delay is an item in a first switching set, and the first switching set comprises 0 microseconds and 35 microseconds.

6. The method according to any one of claims 2 to 5, wherein the method further comprises:
receiving, by the terminal device, second information from the network device, wherein the second information indicates a target frequency band group identifier; and
performing, by the terminal device based on the second information, frequency band switching in a target frequency band group corresponding to the target frequency band group identifier, wherein the target frequency band group identifier is one or more of the N frequency band group identifiers.

7. A communication method, comprising:
determining, by a terminal device, M second switching delays, wherein a j^{th} second switching delay is a delay for switching by the terminal device between a first frequency band group and a second frequency band group, the j^{th} second switching delay is one of the M second switching delays, the first frequency band group and the second frequency band group each comprise at least one frequency band, and M is a positive integer; and
sending, by the terminal device, third information to a network device, wherein the third information comprises at least the j^{th} second switching delay.

8. The method according to claim 7, wherein the third information further comprises at least a first frequency band group identifier and a second frequency band group identifier.

9. The method according to claim 8, wherein the method further comprises:
receiving, by the terminal device, frequency band group identification information from the network device, wherein the frequency band group identification information comprises at least the first frequency band group identifier and the second frequency band group identifier.

10. The method according to claim 8 or 9, wherein the third information further comprises quantities of transmit radio frequency chains supported by the terminal device in the frequency bands comprised in the first frequency band group and the second frequency band group, and the third information is used by the network device to determine scheduling of uplink data.

11. The method according to any one of claims 8 to 10, wherein the second switching delay is an item in a second switching set, and the second switching set comprises 140 microseconds, 210 microseconds, and 280 microseconds.

12. The method according to any one of claims 9 to 11, wherein the frequency band group identification information comprises X frequency band group identifiers, X is a positive integer, and the method further comprises:
receiving, by the terminal device, fourth information from the network device, wherein the fourth information indicates target frequency band group identifiers; and
performing, by the terminal device based on the fourth information, frequency band switching between target frequency band groups corresponding to the target frequency band group identifiers, wherein the target frequency band group identifiers are at least two of the X frequency band group identifiers.

13. The method according to claim 7, wherein the third information further comprises at least a j^{th} frequency band group switching identifier, and the j^{th} frequency band group switching identifier is an identifier of switching by the terminal device between the first frequency band group and the second frequency band group.

14. The method according to claim 13, wherein the method further comprises:
receiving, by the terminal device, frequency band group switching identification information from the network device, wherein the frequency band group switching identification information comprises at least the j^{th} frequency band group switching identifier.

15. The method according to claim 13 or 14, wherein the third information further comprises quantities of transmit radio frequency chains supported by the terminal device in the frequency bands comprised in the first frequency band group and the second frequency band group that are identified by the j^{th} frequency band group switching identifier, and the third information is used by the network device to determine scheduling of uplink data for transmission.

16. The method according to any one of claims 13 to 15, wherein the second switching delay is an item in a third switching set, and the third switching set comprises 0 microseconds, 35 microseconds, 140 microseconds, 210 microseconds, and 280 microseconds.

17. The method according to any one of claims 14 to 16, wherein the frequency band group switching identifier comprises Y frequency band group switching identifiers, Y is a positive integer, and the method further comprises:
receiving, by the terminal device, fifth information from the network device, wherein the fifth information indicates a target frequency band group switching identifier; and
performing, by the terminal device based on the fifth information, frequency band switching between target frequency band groups corresponding to the target frequency band group switching identifier, wherein the target frequency band group switching identifier is one or more of the Y frequency band group switching identifiers.

18. A communication method, comprising:
receiving, by a network device, first information from a terminal device, wherein the first information comprises first switching delays of N frequency band groups, the N frequency band groups comprise an i^{th} frequency band group, the first switching delays of the N frequency band groups comprise an i^{th} first switching delay, the i^{th} first switching delay is a delay for switching by the terminal device between at least two different frequency bands comprised in the i^{th} frequency band group, and N is a positive integer; and
determining, by the network device, scheduling of uplink data based on the first information.

19. The method according to claim 18, wherein the first information further comprises an i^{th} frequency band group identifier, the i^{th} frequency band group identifier is any one of N frequency band group identifiers, and the N frequency band group identifiers are in one-to-one correspondence with the switching delays of the N frequency band groups.

20. The method according to claim 19, wherein the method further comprises:
sending, by the network device, frequency band group identification information to the terminal device, wherein the frequency band group identification information comprises the N frequency band group identifiers.

21. The method according to any one of claims 18 to 20, wherein the first information further comprises quantities of transmit radio frequency chains supported by the terminal device in the at least two different frequency bands.

22. The method according to any one of claims 18 to 21, wherein the first switching delay is an item in a first switching set, and the first switching set comprises 0 microseconds and 35 microseconds.

23. The method according to any one of claims 19 to 22, wherein the method further comprises:
sending, by the network device, second information to the terminal device, wherein the second information indicates a target frequency band group identifier, the target frequency band group identifier indicates the terminal device to perform frequency band switching in a target frequency band group corresponding to the target frequency band group identifier, and the target frequency band group identifier is one or more of the N frequency band group identifiers.

24. A communication method, comprising:
receiving, by a network device, third information from a terminal device, wherein the third information comprises at least a j^{th} second switching delay, the j^{th} second switching delay is a delay for switching by the terminal device between a first frequency band group and a second frequency band group, the j^{th} second switching delay is one of M second switching delays, the first frequency band group and the second frequency band group each comprise at least one frequency band, and M is a positive integer; and
determining, by the network device, scheduling of uplink data based on the third information.

25. The method according to claim 24, wherein the third information further comprises at least a first frequency band group identifier and a second frequency band group identifier.

26. The method according to claim 25, wherein the method further comprises:
sending, by the network device, frequency band group identification information to the network device, wherein the frequency band group identification information comprises at least the first frequency band group identifier and the second frequency band group identifier.

27. The method according to claim 25 or 26, wherein the third information further comprises quantities of transmit radio frequency chains supported by the terminal device in the frequency bands comprised in the first frequency band group and the second frequency band group.

28. The method according to any one of claims 25 to 27, wherein the second switching delay is an item in a second switching set, and the second switching set comprises 140 microseconds, 210 microseconds, and 280 microseconds.

29. The method according to any one of claims 25 to 28, wherein the frequency band group identification information comprises X frequency band group identifiers, X is a positive integer, and the method further comprises:
sending, by the network device, fourth information to the terminal device, wherein the fourth information indicates target frequency band group identifiers, the target frequency band group identifiers are used to perform frequency band switching between target frequency band groups corresponding to the target frequency band group identifiers, and the target frequency band group identifiers are at least two of the X frequency band group identifiers.

30. The method according to claim 24, wherein the third information further comprises at least a j^{th} frequency band group switching identifier, and the j^{th} frequency band group switching identifier is an identifier of switching by the terminal device between the first frequency band group and the second frequency band group.

31. The method according to claim 30, wherein the method further comprises:
sending, by the network device, frequency band group switching identification information to the terminal device, wherein the frequency band group switching identification information comprises at least the j^{th} frequency band group switching identifier.

32. The method according to claim 30 or 31, wherein the third information further comprises quantities of transmit radio frequency chains supported by the terminal device in the frequency bands comprised in the first frequency band group and the second frequency band group that are identified by the j^{th} frequency band group switching identifier.

33. The method according to any one of claims 30 to 32, wherein the second switching delay is an item in a third switching set, and the third switching set comprises 0 microseconds, 35 microseconds, 140 microseconds, 210 microseconds, and 280 microseconds.

34. The method according to any one of claims 30 to 33, wherein the frequency band group switching identifier comprises Y frequency band group switching identifiers, Y is a positive integer, and the method further comprises:
sending, by the network device, fifth information to the terminal device, wherein the fifth information indicates a target frequency band group switching identifier, the target frequency band group switching identifier indicates the terminal device to perform frequency band switching between target frequency band groups corresponding to the target frequency band group switching identifier, and the target frequency band group switching identifier is one or more of the Y frequency band group switching identifiers.

35. A communication apparatus, wherein the communication apparatus comprises a processor and a memory, the memory is configured to store a computer program or instructions, and the processor is configured to execute the computer program or instructions in the memory, so that the method according to any one of claims 1 to 6, claims 7 to 17, claims 18 to 23, or claims 24 to 34 is performed.

36. A computer-readable storage medium, wherein the computer-readable storage medium stores a computer program, and when the computer program is run on a computer, the computer is enabled to perform the method according to any one of claims 1 to 6, claims 7 to 17, claims 18 to 23, or claims 24 to 34.

37. A computer program product, wherein the computer program product comprises instructions used for performing the method according to any one of claims 1 to 6, claims 7 to 17, claims 18 to 23, or claims 24 to 34.
